(19) Europäisches Patentamt
European Patent Office
Office européen des brevets

(11) **EP 3 951 675 A1**

(12) ## EUROPEAN PATENT APPLICATION
published in accordance with Art. 153(4) EPC

(43) Date of publication:
**09.02.2022 Bulletin 2022/06**

(21) Application number: **20778352.3**

(22) Date of filing: **24.03.2020**

(51) International Patent Classification (IPC):
*G06Q 10/06* (2012.01)    *G06Q 30/02* (2012.01)

(52) Cooperative Patent Classification (CPC):
**G06Q 10/00; G06Q 10/06; G06Q 10/10; G06Q 30/02**

(86) International application number:
**PCT/JP2020/013052**

(87) International publication number:
**WO 2020/196532 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2019 JP 2019061394**

(71) Applicants:
• **Nishimoto, Goro**
  **Tokyo 150-0013 (JP)**
• **Kido, Taichi**
  **Tokyo 150-0013 (JP)**

• **Arami, Shunsuke**
  **Tokyo 150-0013 (JP)**

(72) Inventors:
• **Nishimoto, Goro**
  **Tokyo 150-0013 (JP)**
• **Kido, Taichi**
  **Tokyo 150-0013 (JP)**
• **Arami, Shunsuke**
  **Tokyo 150-0013 (JP)**

(74) Representative: **Maiwald Patent- und Rechtsanwaltsgesellschaft mbH**
**Elisenhof**
**Elisenstraße 3**
**80335 München (DE)**

(54) **USER EDUCATION SUPPORT SYSTEM, USER EDUCATION SUPPORT METHOD, AND USER EDUCATION SUPPORT PROGRAM**

(57)    Provided is a user development support system in which an information provider (J1) provides multiple pieces of information in steps in order for a user to achieve a desired purpose and target, and the system includes an analysis unit (17) configured to propose to the information provider (J1), information that that is to be newly provided based on a degree of utilization of a user with respect to each of the multiple pieces of information, and a proposal unit (20) configured to provide information based on a proposal from the analysis unit (17). The proposal unit (20) repeatedly provides the information having the same details until the result of a degree of utilization of the user reaches a predetermined degree of achievement defined in advance, by using several media with different types of tools configured to provide the information.

FIG. 1

**Description**

TECHNICAL FIELD

The present invention relates to a user development support system, a user development support method and a user development support program.

BACKGROUND ART

Patent document 1, Patent document 2, Patent document 3, Patent document 4, and Patent document 5 disclose techniques related to a user development support system, a user development support method, and a user development support program.

PRIOR ART DOCUMENT

PATENT DOCUMENT

Patent document 1: Japanese Patent Application Publication No. 2001-338113
Patent document 2: Japanese Patent Application Publication No. 2006-127320
Patent document 3: Japanese Patent No. 5646546
Patent document 4: Japanese Patent No. 5878218
Patent document 5: Japanese Patent No. 5953588

SUMMARY OF THE INVENTION

Conventionally, as one of the user development systems related to purchasing behavior, various devices and systems which promote goods and services and encourage the purchasing behavior of customers (users) have been known.

Here, the purchasing behavior is mainly a purchase of goods by customers, and the action itself (behavior) is a customer's purpose and target. One of the purchasing behaviors is the use of service. The service may be used, for example, to enter a cram school (private school) for the purpose and target to pass an examination, to join the gym for the purpose and target to lose weight, or to participate in company training for the purpose and target to improve skills.

As a variety of devices and systems for encouraging customer's purchase behaviors, an automatic analysis system for net collection data has been proposed (See Patent Document 1). The automatic analysis system distributes questionnaires and advertisements from a Web site to a large number of customers, and distributes new advertisements based on the results of analyzing a response of each customer to lead to the purchasing behavior of the customers.

A terminal attribute estimation device has also been developed for estimating the tastes and preferences of guests who do not log in to a Web site, and effectively advertising to the guests (See Patent Document 2).

Further, in order to effectively distribute an advertisement through a Web site, there has been proposed an advertisement distribution device which grasps a user's purchasing pattern based on the operation of a user terminal and displays an advertisement corresponding thereto (See Patent Document 3).

Further, there has been proposed an advertisement evaluation system capable of improving the accuracy of user's behavior analysis and advertisement effect measurement and efficiently planning the distribution of video advertisements according to viewing conditions (See Patent Document 4).

In addition, a system that can be used with a customer relationship management (CRM) system or a closed loop marketing (CLM) system has been developed (See Patent Document 5). This system improves the inefficiency caused by a risk associated with the transmission of an electronic mail or the like when the electronic mail or the like is used for providing information to customers.

However, Documents 1 to 5 disclose flat user development systems for encouraging purchase behavior for any customer. For this reason, it is not possible to quantitatively determine a level of understanding of customers about the details of information at the time of the information provision with respect to a purpose and a target that each customer intends to achieve.

Therefore, in the case of supporting the achievement of a purpose and a target of the customers, it is not always to provide the most optimal information to a specific customer who is a target (TG), so that it is difficult to effectively develop each of the customers.

In addition to being unable to quantitatively determine a level of understanding of a customer for information provision, it is difficult to optimize the development of an individual customer, resulting in failure to improve the efficiency of customer's development.

In particular, on the information provider side, a person in charge of sales and marketing, etc., and a manager who is a boss of the person in charge do not share a level of understanding of customers for the information provision. As a result, it is not possible to effectively provide appropriate information in light of an actual difference from a plan to be provided, resulting in an excessive amount of time and money spent on developing customers for achieving the purpose and target.

An object of the present invention is to provide a user development support system, a user development support method and a user development support program capable of quantitatively determining a degree of achievement of a user's level of understanding for information provision with respect to a desired purpose and target that the user intends to achieve, and effectively supporting a development of the user for achieving the purpose and target.

Provided is a user development support system according to the present invention in which an information provider provides multiple pieces of information in steps, provided that a predetermined degree of achievement is reached in order for a user to achieve a desired purpose and target, and the system includes a storage unit configured to store quantified data in advance in correspondence with the multiple pieces of information and a degree of utilization of the user, the quantified data configured to quantify a level of understanding of the user with respect to each of the multiple pieces of information as a degree of utilization, a quantitation unit configured to quantify a degree of utilization of the user with respect to each of the multiple pieces of information at each step providing each of the multiple pieces of information by using the quantified data of the storage unit, an analysis unit configured to propose to the information provider based on a result of quantification by the quantification unit, information that is necessary for the user to achieve the desired purpose and target and that is to be newly provided to the user, and a proposal unit configured to repeatedly provide the information having the same details until the result of quantification by the quantification unit reaches the predetermined degree of achievement defined in advance, based on a proposal from the analysis unit, by using several media with different types of tools configured to provide the information at each step in which the multiple pieces of information are provided in steps.

Provided is a user development support method according to the present invention in which an information provider provides multiple pieces of information in steps, provided that a predetermined degree of achievement is reached in order for a user to achieve a desired purpose and target, and the method includes quantifying, as a degree of utilization, a level of understanding of the user with respect to each of the multiple pieces of information at each step providing each of the multiple pieces of information by using a storage unit storing quantified data in advance, proposing to the information provider, information that is necessary for the user to achieve the desired purpose and target and that is to be newly provided to the user based on a result of the quantification, and repeatedly providing the information having the same details until the result of the quantification reaches the predetermined degree of achievement defined in advance, based on the proposal, by using several media with different types of tools configured to provide the information at each step in which the multiple pieces of information are provided in steps.

A user development support program according to the present invention allows a computer to execute the user development support system of the first embodiment.

According to the present invention, it is possible to provide a user development support system, a user development support method and a user development support program capable of quantitatively determining a degree of achievement of a user's level of understanding for information provision with respect to a desired purpose and target that the user intends to achieve, and effectively supporting a development of the user for achieving the purpose and target.

BRIEF DESCRIPTION OF THE DRAWINGS

[FIG. 1] FIG. 1 is a block diagram showing a configuration example of an information providing system to which a user development support system according to an embodiment of the present invention is applied.

[FIG. 2] FIG. 2 is a configuration diagram showing an example of a customer development unit (CEM) of FIG. 1.

[FIG. 3] FIG. 3 is a schematic view showing a data management and processing process in an information providing system.

[FIG. 4] FIG. 4 is a schematic diagram showing a chart of a data management and processing process in an information providing system

[FIG. 5] FIG. 5 is a schematic view showing a list of CE stages for each customer when an information providing system is applied to automobile sales, as an example.

[FIG. 6] FIG. 6 is a schematic view showing a CE stage map when an information delivery system is applied to automotive sales.

[FIG. 7] FIG. 7 is a schematic view showing a list of CE stage for each person in charge when an information providing system is applied to automobile sales.

[FIG. 8A] FIG. 8A is a schematic view showing an example of customer information when applied to automobile sales.

[FIG. 8B] FIG. 8B is a schematic view showing an example of customer information when applied to automobile sales.

[FIG. 8C] FIG. 8C is a schematic view showing an example of customer information when applied to automobile sales.

[FIG. 8D] FIG. 8D is a schematic view showing an example of customer information when applied to automobile sales.

[FIG. 9] FIG. 9 is a schematic view showing a registration of CE stages and perfect scores when applied to automobile sales as an example.

[FIG. 10] FIG. 10 is a schematic view showing a relationship between status and earned score as results of information providing activities when applied to automobile sales as an example.

[FIG. 11A] FIG. 11A is a schematic view showing a registration of contents when applied to automobile sales as an example.

[FIG. 11B] FIG. 11B is a schematic view showing a registration of contents when applied to automobile sales as an example.

[FIG. 12A] FIG. 12A is a schematic view showing activity logs when applied to automobile sales as an example.

[FIG. 12B] FIG. 12B is a schematic view showing activity logs when applied to automobile sales as an example.

MODE FOR CARRYING OUT THE INVENTION

Hereinafter, a user development support system, a user development support method and a user development support program according to the present embodiment will be described in detail with reference to the drawings.

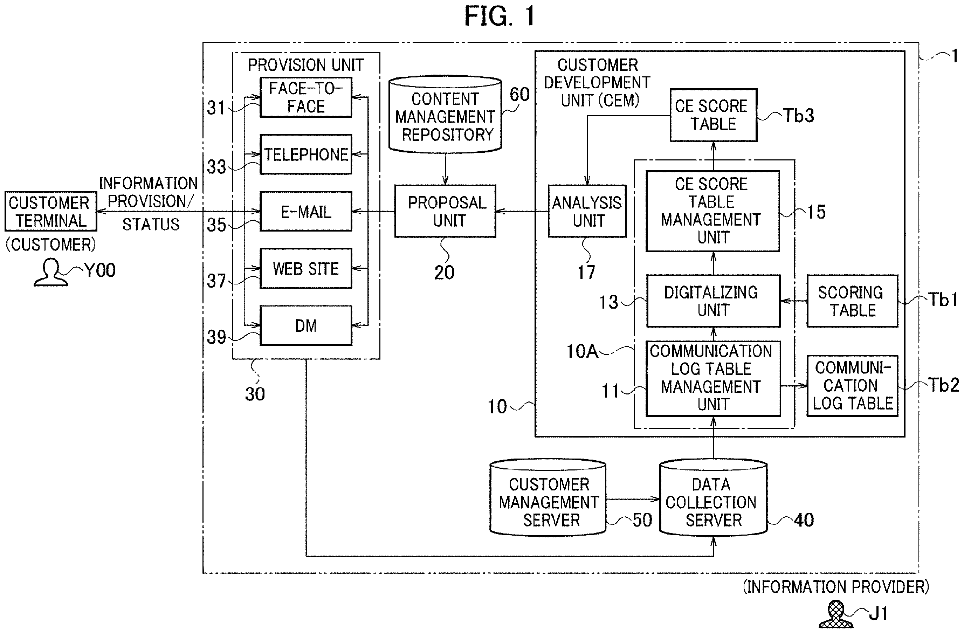

FIG. 1 is a block diagram showing a configuration example of an information providing system 1 to which a user development support system (Customer Engagement Manager) according to an embodiment of the present invention is applied. The information providing system 1 of the present embodiment can achieve various functions by installing a user development support program of the present invention on various types of computers such as stand-alone computers, cloud computers, and on-premises computers.

In the present embodiment, various types of information provided to a user in steps by information providing activities are also referred to as communication information, and the details of the communication information are described as the content(s), and a type of the content is described as a channel (attribute information). The channel corresponds to a tool for providing information. The degree of utilization that is an index of a level of understanding (degree of achievement) of user for the communication information in the information providing activities is called a status.

At least one or more information providing activities that is/are cleared each time a level of understanding of user reaches a predetermined degree of achievement with respect to the provision of various types of communication information in the information providing activities is/are called a CE (Customer Engagement) stage. That is, the CE stage defines, as an index, a level of understanding of the user at each step of multiple communication information provided in steps in order a user to achieve a desired purpose and target.

In each CE stage, in principle, the provision of communication information having the same content and a different channel is repeated several times, for example, as a single CE stage until a level of understanding of the user with respect to the communication information to be provided reaches a predetermined degree of achievement.

In the information providing system 1, for example, an information provider (person in charge/manager) J1 performs in steps information providing activities (appeal activities) for encouraging a customer (user) Y00 to purchase goods or to use a service such as entering a cram school (private school). In the information providing system 1, a level of understanding of a customer Y00 in the communication information provided for each CE stage is digitalized (quantified) in order to develop purchasing behavior of the customer Y00 (achievement of desired purpose and target). By reflecting the results in the planning of subsequent information providing activities, it is possible to effectively support the development.

As shown in FIG. 1, for example, the information providing system 1 according to the present embodiment includes a customer development unit (CEM) 10, a proposal unit 20, a provision unit 30, a data collection server 40, a customer management server (user management server) 50, and a content management repository 60.

Although the detailed description is omitted here, the provision of each content is managed by each IT system (for example, CRM system, etc.). Alternatively, it may be managed in a content management repository 60 or the like.

The customer development unit 10 includes, for example, a communication log table management unit 11, a digitalizing unit (quantitation unit) 13, a CE score table management unit 15, and an analysis unit 17. In this embodiment, the communication log table management unit 11, the digitalizing unit 13, and the CE score table management unit 15 constitute a control system 10A as a management unit.

The customer development unit 10 further includes a scoring table Tb1, a communication log table Tb2, and a CE score table Tb3 as storage units.

The communication log table management unit 11 records the results of information providing activities for each customer Y00 by using the communication log table Tb2. Although the details will be described later, the results of the information providing activities are managed, for example, in time series on a customer basis or on an information provider basis.

The digitalizing unit 13 digitalizes a status, which is one of the results of information providing activities on the communication log table Tb2 managed by the communication log table management unit 11, by using the scoring table Tb1.

Although the details will be described later, for example, the degree to which the content of the communication information provided in steps in each CE stage is understood by the customer Y00 is digitalized according to the status. Thus, it is possible to quantitatively determine a degree of achievement of a level of understanding of the customer Y00 for the information provision with respect to a purpose and a target to be achieved.

That is, since the trend of the customer Y00, which is the information providing destination, can be visualized by digitalization, it becomes easier to manage a progress of the predetermined information providing activity policy (plan to be provided).

The degree to which the content of the communication information provided in each CE stage is understood can be determined by quantification using logic common to all channels, for example, by calculating a CE stage score (CE score) to be described later. The CE stage score is quantified, as a content understanding level (perfect 100) by, for example, the following equation (Equation 1).

(Equation 1)

$$\text{Content understanding level} = \Sigma(\text{channel coefficient}) \times (\text{browsing determination coefficient}) \times (\text{material score})$$

In the above equitation, the material score is an index quantifying the degree to which a level of understanding required in the CE stage can be satisfied when browsing each material such as a pamphlet and a slide set like teaching materials and information materials. The materials are media used to provide actual information defined in each content. The material score can be set for each material, for example (basically "100 points" for each material).

The channel coefficient is an index that quantifies a difference in understanding between channels when the same material is assumed to be used for providing information. The channel coefficient is set for each channel, for example.

The browsing determination coefficient is an index for determining a degree of understanding of the details (content) of communication information on the channel. The browsing determination coefficient is set in several steps according to the status. For example, in the case of an e-mail, "1 point"... when a user clicks on a link in the e-mail, "0.5 points" ... when a user has opened the e-mail, and "0 points"... when a user has not opened the e-mail.

However, as the satisfaction condition of each CE stage, for example, when a predetermined degree of achievement (for example, 70 points or more) is reached out of 100 points, it is determined that the CE stage is satisfied. That is, when the content understanding level reaches 70 points, the content of the communication information to be transmitted in the CE stage is understood by the customer Y00, and it is determined that the understanding level of the customer Y00 has reached the CE stage (has cleared this CE stage).

For example, the CE stage may define the stepped deepening of a level of understanding of the customer Y00 in communication information provided for each stage as "level of understanding of provided information".

Ideally, it is desirable to be completely cleared (reached more than 70 points) in all of the CE stages, but for example, when the total score reaches 40 points (predetermined degree of achievement), the information providing activity in the next CE stage may be performed (update of CE stage).

It is not necessary to carry out information providing activities in all of the CE stages to be prepared, and in some cases, necessary information providing activities may be preferentially performed in response to a request from the customer Y00. In addition, it is possible to flexibly cope with a request and situation of the customer Y00 by omitting several CE stages.

For quantification, a material list may be prepared that defines the content necessary to reach a CE stage, a material for providing the content, and a channel for providing the material.

In the material list, the CE stage is always associated with the content and the material. For example, the material may be associated with the content to be communicated in any unit (page, paragraph, line, video chapter, etc.).

When the material is registered in an electronic system, an arbitrary sequential number is assigned and associated with a system log.

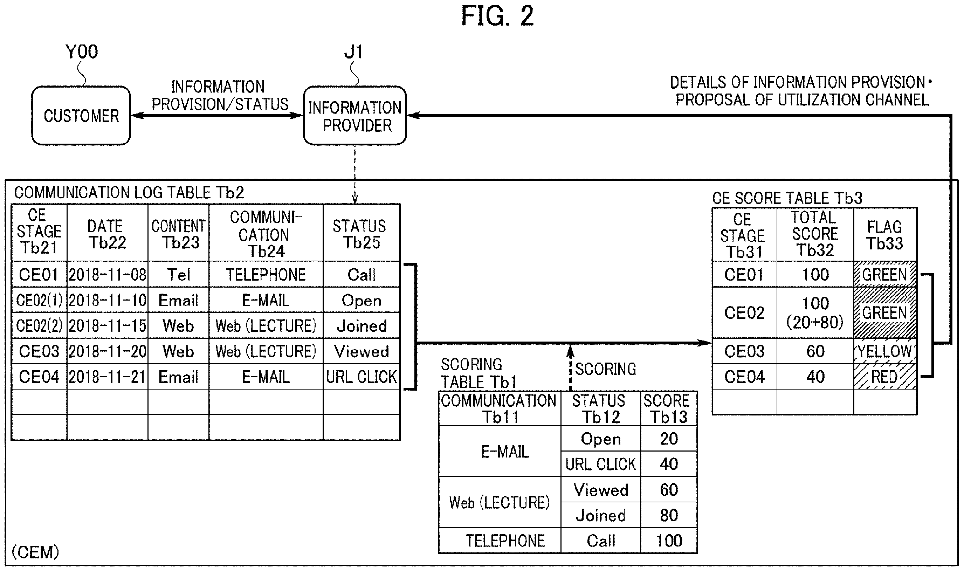

FIG. 2 shows a configuration example of the tables Tb1, Tb2, and Tb3 in the customer development unit 10 (each unit of the control system 10A and the analysis unit 17 of the customer development unit 10 shown in FIG. 1 are not shown).

The CE score table management unit 15 aggregates and manages scores, digitalized by the digitalizing unit 13, for each CE stage by using the CE score table Ta3. Although the details will be described later, the aggregate result (total score) for each CE stage is stored together with flag information corresponding to the aggregate result.

The communication log table Tb2 is managed by the communication log table management unit 11, and is configured to record the results of the information providing activities of the information provider J1 for each customer Y00, as shown in FIG. 2, for example. The log table Ta2 includes, as the results of the information providing activities, an area (CE stage) Tb21 for storing an active CE stage, and an area (content) Tb23 for storing the content (content code) of the corresponding communication information. The log table Ta2 further includes an area (date) Tb22 for storing the provision date, an area (communication) Tb24 for storing a channel which is a type of the corresponding content, and an area (status) Tb25 for storing a degree of customer utilization with respect to the provision information.

As shown in FIG. 2, for example, the scoring table Tb1 is used to score a level of understanding about the degree to which the customer understands for each channel of the communication information provided, and is managed by the digitalizing unit 13. The scoring table Ta1 includes an area (communication) Tb11 for storing a channel of communication information, and an area (status) Ta12 for storing the degree of utilization in each channel. The scoring table Ta1 further includes an area (score) Tb13 for storing a numerical value (quantified data) assigned according to the degree of each utilization. For example, the numerical value of the score Tb13 is indicated by a numerical value (0 to 100) out of 100 points, and can be set in advance by the information provider J1.

The CE score table Tb3 is managed by the CE score table management unit 15, and includes, for example, as shown in FIG. 2, a storage area Tb32 for recording a total score (additional score) that is a result of scoring for each active CE stage Tb31. The CE score table Tb3 further includes a storage area Ta33 for recording an index corresponding to the total score as flag information.

In the communication log table Tb2, one attribute (channel) of the content of the communication information to be provided is "telephone", and the degree of utilization (status) in this case is "Call (called)". In addition, one channel of the content of the communication information to be provided is "e-mail (E-mail)", and the status in this case is "Open (opened)/URL click (search for)". Further, one channel of the content of the communication information to be provided is "Web (lecture)", and the status in this case is "Viewed (browsed)/Joined (participated)".

In the scoring table Tb1, for example, a score of "100" is assigned to "Call". Further, for example, a score of "20" is assigned to "Open" and a score of "40" is assigned to "URL click". Further, for example, a score of "60" is assigned to "Viewed" and a score of "80" is assigned to "Joined".

In the present embodiment, as a rough standard for estimating a status of the customer with respect to the communication information, for example, since direct information provision by "telephone" or the like is effective for increasing the status, a score of "100" is assigned to "Call". Next, since active participation in a lecture at the site such as "Web" is effective, for example, a score of "80" is assigned to "Joined" and a score of "60" is assigned to "Viewed". Next, in the information provision by "E-mail" or the like, a level of interest is estimated from a customer terminal operated by a customer, and for example, a score of "40" is assigned to "URL Click" which is estimated to be of interest. In addition, a score of "20" is assigned to "Open" whose interest is difficult to estimate, such as opening an e-mail.

In the CE score table Tb3, for example, when the total score Tb32 for each CE stage Tb31 is "80" or more, the storage area Tb33 of the flag information is set to "green" as a level of understanding of the customer is sufficient. When the total score Tb32 is "40" or more and less than "80", the storage area Tb33 of the flag information is set to "yellow" as a level of understanding of the customer Y00 is nearly enough. When the total score Tb32 is less than "40", and the storage area Tb33 of the flag information is set to "red" as a level of understanding of the customer is considered insufficient.

The storage area Ta33 having the flag information is provided, and the area is color-coded, so that the information provider J1 can discriminate a level of understanding of the customer Y00 with respect to the information provision at a glance.

In each of the tables Tb1, Tb2, and Tb3, a file format may be any format. For example, it may be a CSV (Comma-Separated Values) file, an Excel file, or a text file.

The data of the tables Tb1, Tb2, and Tb3 may be generated through a single or a plurality of IT systems, tools, or the like. That is, even in a case where a different IT system is introduced for each channel or where a system for manually inputting data is adopted, data integration and management of multiple channels can be performed if a data log can be acquired.

Further, it may be operated in either a cloud format or an on-premises format without depending on the tables Tb1, Tb2 and Tb3, and data generated automatically or manually on a desired server may be updated at an arbitrary frequency (for example, once a day).

In FIG. 1, the analysis unit 17 of the customer development unit 10 analyzes the details (scoring results) of the CE score table Tb3 managed by the CE score table management unit 15. Based on the total score Tb32, for example, the analysis unit 17 proposes, to the proposal unit 20, a tool (utilization channel) corresponding to a channel necessary for encouraging the purchase behavior of the customer Y00 as communication information to be newly provided to the customer Y00. At this time, the analysis unit 17 determines whether or not to update the CE stage based on the result of the analysis.

The proposal unit 20 controls the provision unit 30 described later based on the result of the analysis by the analysis unit 17 and data from the content management repository 60.

The provision unit 30 is controlled by the proposal unit 20 according to which tool is used to provide the subsequent information, and includes, for example, 5 channels of "face-to-face" 31, "telephone" 33, "e-mail" 35, "Web site" 37, and "DM (direct mail)" 39. That is, when a channel of communication information to be newly provided is, for example, "Shop" to be orally explained when visiting a shop or the like, the "face-to-face" 31 of the provision unit 30 is selected as the utilization channel to provide information to the customer Y00. Similarly, when a channel of communication information to be newly provided is, for example, "Tel" by telephone, the "telephone" 33 of the provision unit 30 is selected as the utilization channel to provide information to the customer Y00. Similarly, when a channel of communication information to be newly provided is "E-mail" by e-mail, for example, the "E-mail" 35 of the provision unit 30 is selected as the utilization channel to provide information to the customer Y00. Similarly, when a channel of communication information to be newly provided is "Web" such as a Web page, the "Web site" 37 of the provision unit 30 is selected as the utilization channel to provide information to the customer Y00. Similarly, when a channel of communication information to be newly provided is, for example, "DM" by direct mail, the "DM" 39 of the provision unit 30 is selected as the utilization channel to provide information to the customer Y00.

The channel selection can be automatically controlled according to the results of the analysis. Alternatively, the channel can be selected by the information provider J1 manually switching a CRM (Customer Relationship Management) system or the like based on the details (analysis report, etc.) of the CE score table Tb3.

The data collection server 40 collects a response of the customer Y00 (degree of utilization) with respect to the information provision as a status. The data collection server 40 supplies the collected status to the communication log table management unit 11 for managing the communication log table Tb2, based on, for example, customer information (to be described later) from the customer management server 50 to be connected.

The customer management server 50 manages various kinds of customer information (identity/user Information) related to some customers Y00, and supplies the customer information of each customer Y00 to the data collection server 40, for example.

The content management repository 60 is a database (DB) for managing various contents, and is updated by a manager to be described later and supplies necessary contents to the proposal unit 20 as appropriate.

In this way, a degree of utilization of the customer Y00 with respect to the communication information provided is collected as a status through the data collection server 40 and further digitalized. By reflecting the results of the communication information to be newly provided to the customer Y00, more effective support can be provided in the development of the customer Y00.

Referring to FIG. 2, an analysis process performed by the analysis unit 17 of the customer development unit 10 will be described by way of example.

For example, in the CE stage CE01, it is assumed that the information providing activity by "telephone" is performed with respect to the customer Y00, and that the status of "Call" is obtained as a result. Thus, the total score Tb32 of the CE score table Tb3 is set to "100" and the storage area Tb33 of the flag information is set to "green".

As a result, the analysis unit 17 first determines that a level of understanding of the customer Y00 with respect to the CE stage CE01 is sufficient from the status of the total score Tb32 of the CE score table Tb3 and the storage area Tb33 of the flag information. Therefore, as the next CE stage, the information providing activity in the CE stage CE02 is newly performed.

For example, in CE stage CE02(1), it is assumed that the information providing activity by "E-mail" is performed with respect to the customer Y00, and that the status of "Open" is obtained as a result. In this case, the total score Tb32 of the CE score table Tb3 is set to "20", and the storage area Tb33 of the flag information is set to "red" (not shown).

As a result, the analysis unit 17 determines that a level of understanding of the customer Y00 with respect to the CE stage CE02(1) is insufficient from the status of the total score Tb32 of the CE score table Tb3 and the storage area Tb33 of the flag information. In this case, in order to clear the CE stage CE02 as communication information to be newly provided, it is determined that provision of the same communication information is essential. Therefore, as the next CE stage, the information providing activity in the CE stage CE02(2) is repeatedly performed.

For example, in CE stage CE02(2), it is assumed that the information providing activity by "Web" is performed with respect to the customer Y00, and that the status of "Joined" is obtained as a result. In this case, the total score Tb32 of the CE score table Tb3 is set to "100 (20 + 80)", and the storage area Tb 33 of the flag information is set to "green".

As a result, the analysis unit 17 determines that a level of understanding of the customer Y00 with respect to the CE stage CE02 is sufficient from the status of the total score Tb32 of the CE score table Tb3 and the storage area Tb33 of the flag information. Therefore, the information providing activity in the CE stage CE03 is repeatedly performed as the next CE stage.

For example, in the CE stage CE03, it is assumed that the information providing activity by "Web" is performed with respect to the customer Y00, and that the status of "Viewed" is obtained as a result. In this case, the total score Tb32 of the CE score table Tb3 is set to "60", and the storage area Tb33 of the flag information is set to "yellow".

The analysis unit 17 determines that a level of understanding of the customer Y00 with respect to the CE stage CE03 is somewhat insufficient from the status of the total score Tb32 of the CE score table Tb3 and the storage area Tb33 of the flag information. Normally, according to this determination, the information providing activity in the CE stage CE03 is repeatedly performed as the next CE stage.

That is, as communication information to be newly provided, it is determined that provision of the same communication information is essential in order to clear the CE stage CE03. Then, as the next CE stage, the information providing activity is performed in the CE stage CE03(2) (not shown).

On the other hand, the analysis unit 17 is set to be determined such that a certain level of understanding is recognized although somewhat insufficient from the status of the total score Tb32 of the CE score table Tb3 and the storage area Tb33 of the flag information. As a result, the CE stage CE03 is updated, which makes it possible to perform the information providing activity in the CE stage CE04 as a new CE stage.

For example, in the CE stage CE04, it is assumed that the information providing activity by "E-mail" is performed with respect to the customer Y00, and that the status of "URL click" is obtained as a result. In this case, the total score Tb32 of the CE score table Tb3 is set to "40" and the storage area Tb 33 of the flag information is set to "red".

The analysis unit 17 determines that a level of understanding of the customer Y00 with respect to the CE stage CE04 is insufficient from the status of the total score Ta32 of the CE score table Ta3 and the storage area Ta33 of flag information. In this case, as communication information to be newly provided, it is determined that provision of the same communication information is essential in order to clear the CE stage CE04.

Based on the result, the information provider J1 selects, for example, communication information such that a level of understanding with respect to the CE stage CE04 reaches a predetermined degree of achievement. Then, the selected new communication information is set to be provided to the customer Y00 as a new information providing activity (CE04(2)) in the CE stage CE04.

In this way, in the CE stage CE04, the same communication information is repeatedly provided until a level of understanding with respect to the communication information to be provided reaches a predetermined degree of achievement. When a level of understanding (total score) with respect to multiple pieces of communication information provided reaches a predetermined degree of achievement, the CE stage CE04 is cleared, which makes it possible to perform the information providing activity in the next CE stage CE05.

As the communication information to be repeatedly provided, for example, communication information having the same content as that already provided to the customer Y00 and having a different channel is set to be selected in the CE stage. Thus, it is possible to effectively support the development of the customer Y00 by preventing information already known to the customer Y00 or information not interested in the customer Y00 from being simply repeatedly provided.

When it is recognized that the communication information has already been provided in the CE stages CE01 to CE04, it is also possible to newly perform the information providing activity in the CE stage CE05 with priority over clearing the CE stage CE04.

In either case, the details of the CE score table Tb3 can be shared by a plurality of information providers J1.

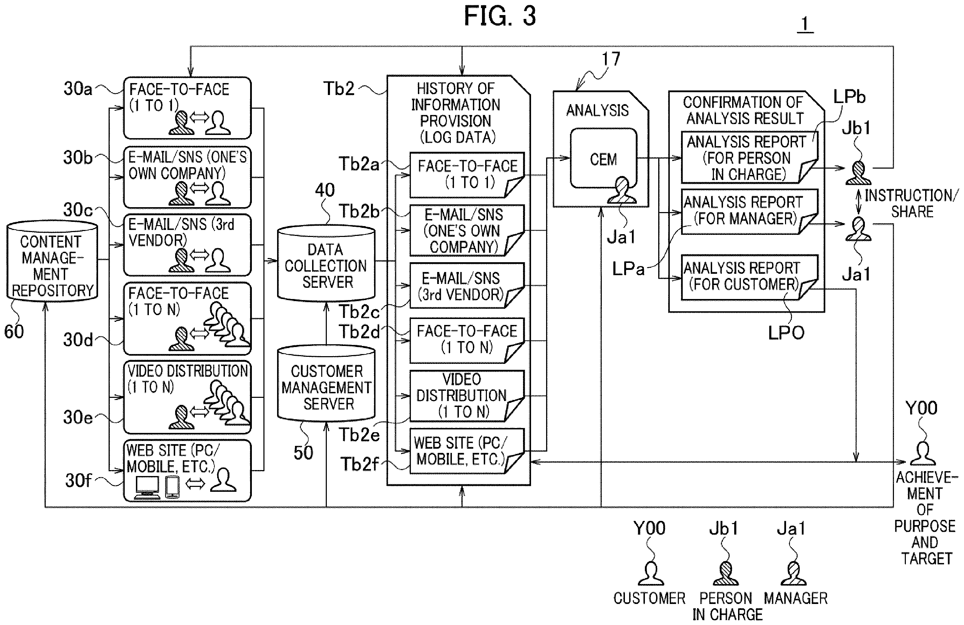

FIG. 3 schematically shows a data management and processing process in the information providing system 1. In this example, the information provider J1 includes a person in charge Jb1 of sales and a manager Ja1 of the person in charge Jb1.

The channel includes, for example, a face-to-face (one to one) 30a, an E-mail/SNS (one's own company) 30b, an E-mail/SNS (3rd Vendor) 30c, a face-to-face (1 to N) 30d, a video distribution (1 to N) 30e, and a Web site (PC/mobile, etc.) 30f. The storage areas of the log data include a face-to-face (one to one) Tb2a, an E-mail/SNS (one's own company) Tb2b, an E-mail/SNS (3rd Vendor) Tb2c, a face-to-face (1 to N) Tb2d, a video distribution (1 to N) Tb2e, and a Web site (PC/mobile, etc.) Tb2f.

Analysis processing in the analysis unit 17 is performed by the manager Ja1, and as a result of the analysis, an analysis report LPa for the manager Ja1, an analysis report LPb for the person in charge Jb1, and an analysis report LP0 for the customer Y00 are issued.

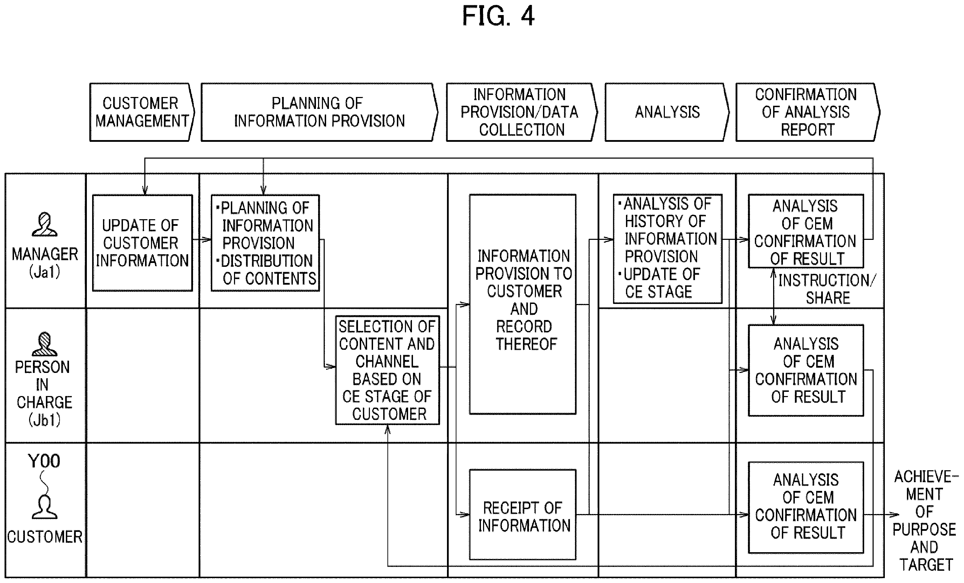

FIG. 4 shows a chart of the data management and processing process shown in FIG. 3.

As shown in FIG. 4, the manager Ja1 performs updating of customer information, planning of information provision and distribution of contents, information provision to the customer Y00 and recording of such information, a history analysis of information providing activities, and updating of the CE stage, and a confirmation of the analysis results (analysis report LPa). Updating of customer information, planning of information provision and distribution of the contents are performed based on the results obtained when the analysis report LPa is confirmed.

The person in charge Jb1 selects content and a channel based on the CE stage of the customer Y00, provides information to the customer Y00 and records such information, and confirms the analysis results (analysis report LPb). The selection of the contents and the channels 30a to 30f based on the CE stage of the customer Y00 is performed based on the results obtained when the analysis report LPb is confirmed.

The manager Ja1 and the person in charge Jb1 provide information to the customer Y00 and record such information in accordance with the selection results of the contents and the channels 30a to 30f by the person in charge Jb1. Thus, the information provision and the video distribution performed by the person in charge Jb1 face-to-face with the customer Y00 can be simultaneously performed by a plurality of (For example, N people) customers Y00 without a one-to-one basis.

The customer Y00 receives the provided communication information and confirms the analysis results (analysis report LP0).

Next, an embodiment of the information providing system 1 will be described in detail. In the embodiment, a case where appeal activities (information providing activities) for encouraging a customer to perform purchasing behavior (purchase) of an automobile are performed in automobile sales will be described.

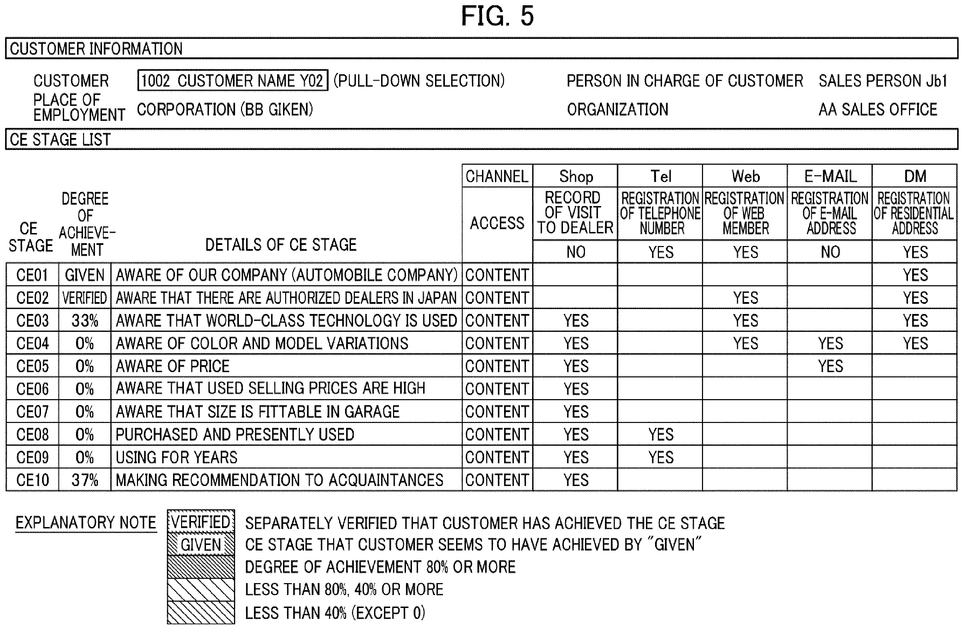

FIG. 5 shows a list of CE stages using automobile sales as an example. FIG. 5 shows an example in which the CE stage list is used for each customer. The sales person Jb1 is, for example, a person who belongs to the AA sales office and performs information providing activities for each customer Y00 (Y01 to Y05).

In the CE stage list, as shown in FIG. 5, for each CE stage CE00, a degree of achievement (indicated by percent), the details of each CE stage CE00, and available utilization channels (Access Flag/utilization data) are set for each customer Y00.

As an example, when "customer name Y02" is the customer Y00 (customer Y02), the CE stages CE01 to CE 10 are assigned to achieve a desired purpose and target of purchasing an automobile. In the CE stage CE01, the degree of achievement is "given" for the invitation information whose details are "aware of our company". In the CE stage CE02, the degree of achievement is "verified (20%)" for the invitation information whose details are "aware of existence of authorized dealers of sales cars (dealers)". In the CE stage CE03, the degree of achievement is "33%" for the invitation information whose details are "aware that sales cars have world-class technology". In the CE stage CE04, the degree of achievement is "0% (blank)" for the invitation information whose details are "aware of lineup of sales cars (color and model variations)". In the CE stage CE05, the degree of achievement is "0%" for the invitation information whose details are "aware of price of sales cars". In the CE stage CE06, the degree of achievement is "0%" for the invitation information whose details are "aware that used sales cars are traded at high prices". In the CE stage CE07, the degree of achievement is "0%" for the invitation information whose details are "aware that size of sales car is fittable in garage". In the CE stage CE08, the degree of achievement is "0%" for the invitation information whose details are "sales car has already been purchased". In the CE stage CE09, the degree of achievement is "0%" for the invitation information whose details are "sales car has been used for years". In the CE stage CE 10, the degree of achievement is "37%" for the invitation information whose details are "recommend sales car to acquaintances".

In the list, for example, "given" is granted to the CE stage that seems to have already cleared the details of the invitation information to be provided in consideration of the background and history of the customer Y02. Further, "verified" is granted to the CE stage in which the fact that a level of understanding of the customer Y02 has previously cleared the CE stage has been verified by a predetermined verification method.

As the channels, "Shop", "Tel", "Web", "E-mail" and "DM" are prepared in advance. Yes or No in the customer Y02 is reported (registered) with respect to a record of visit (visit shop) for "Shop", a telephone number registration for "Tel", and a site member registration for "Web". Similarly, Yes or No in the customer Y02 is reported (registered) with respect to an e-mail address registration for "E-mail" and a residential address registration for "DM".

In the list, when the details of the CE stage are provided as invitation information in the CE stages CE01 to CE10, information (utilization channel data) indicating which channel of "Shop", "Tel", "Web", "E-mail", and "DM" can be used is registered in advance. For example, in the CE stage CE05, when the details of the CE stage are to be provided to the customer Y02 as the invitation information, it is possible to provide the information by utilizing channels such as "Shop" and "E-mail" from this list, which is also understood to be effective.

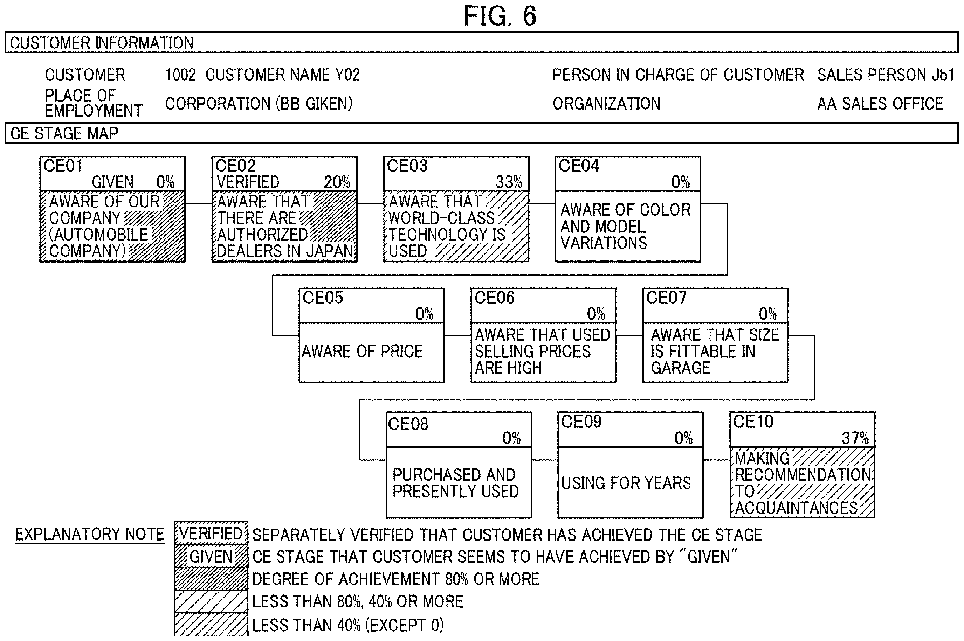

FIG. 6 shows that the CE stages CE01 to CE 10 in the CE stage list shown in FIG. 5 are expanded (mapped) in a map shape.

In this example, the details of the CE stages CE01 to CE 10 are sequentially developed, but the present invention is not limited to this. For example, the contents may be appropriately rearranged according to a level of understanding of the customer Y02.

The details of the CE stages CE01 to CE 10 are not limited to the above, and may be such that invitation information such as "aware of average delivery date", "already having estimate" or "already contracted and paid lump-sum money" is provided in steps.

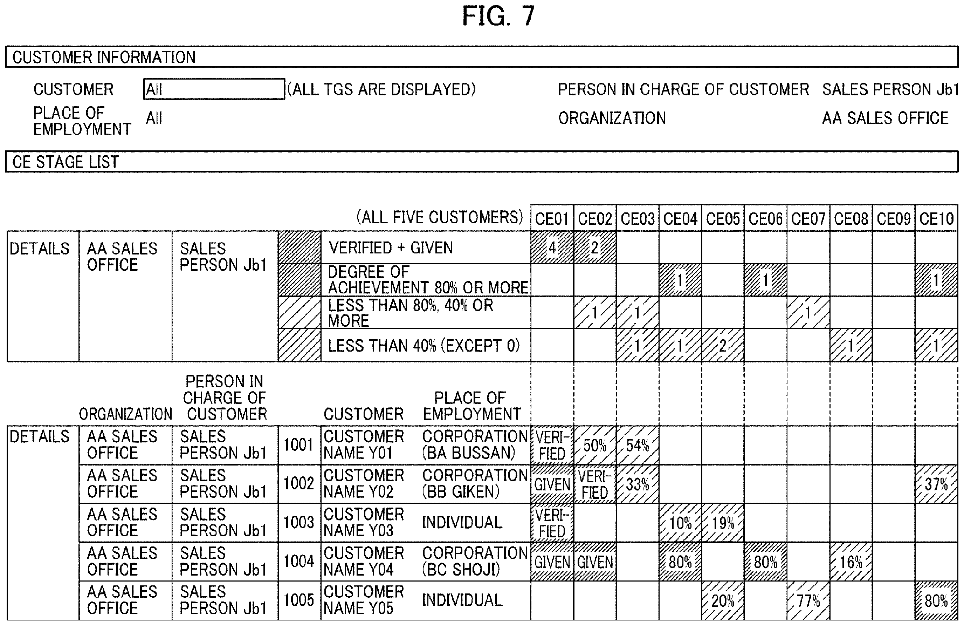

FIG. 7 shows an example of a case where the CE stage list is set to each person in charge in automobile sales.

That is, in FIG. 7, all (for example, customer names Y01 to Y05) of the customers Y00, who are sales targets (TGs), handled by the person in charge Jb1 are displayed in a list.

As is clear from FIG. 7, for example, in the case of the customer Y02 handled by the person in charge Jb1, the degree of achievement for the CE stage CE01 whose details are "aware of our company" is "given", and the degree of achievement for the CE stage CE02 is "verified (20%)" (numerical value in parentheses indicates degree of achievement (not shown in FIG. 7) when "verified "is granted). In the case of the CE stage CE03, the degree of achievement is "33%", and in the case of the CE stage CE 10, the degree of achievement is "37%". Each of the other CE stages CE04, CE05, CE06, CE07, CE08, and CE09 has the degree of achievement of "0% (blank)".

Similarly, for example, in the case of the customer Y01, the degree of achievement of the CE stage CE01 is "verified (40%)" (numerical value in parentheses indicates degree of achievement (not shown in FIG. 7) when "verified" grant is granted), and the CE stages CE02 and CE03 have the degree of achievement of "50%" and "54%", respectively.

Similarly, for example, in the case of the customer Y03, the degree of achievement of the CE stage CE01 is "verified (0%)" (numerical value in parentheses indicates degree of achievement (not shown in FIG. 7) when "verified" grant is granted), and the CE stages CE04 and CE05 have the degree of achievement of "10%" and "19%", respectively.

Similarly, for example, in the case of the customer Y04, the degree of achievement of the CE stages CE01 and CE02 is "given", and the CE stages CE04, CE06 and CE08 have the degree of achievement of "80%", "80%" and "16%", respectively.

Similarly, for example, in the case of the customer Y05, the CE stages CE05, CE07, and CE10 have the degree of achievement of "20%", "77%", and "80%", respectively.

In this list, as shown as an explanatory note in FIG. 7, the number of customers Y01 to Y05 for each CE stage CE01 to CE10 can be aggregated and displayed with respect to each achievement (for example, 4 steps).

For example, in the case of the CE stage CE01 whose details are "aware of our company", the degrees of achievements of the customers Y01 and Y03 are "verified", the degrees of achievements of the customers Y02 and Y04 are "given", and the degree of achievement of the customer Y05 is "0%". For this reason, the number of people whose degree of achievement is "verified + given" is regarded as "4 persons", and the number of people whose degree of achievement except for "verified + given" is "80% or more" "less than 80%, 40% or more" and "less than 40%" is all regarded as 0 persons.

As described above, the CE stage can be displayed in a visually different format such as a list screen, a map screen, or by each customer or each person in charge, and the CE stage can be selected appropriately according to the person, such as the manager Ja1 or the person in charge Jb1, who views the results of the analysis, and according to the purpose of use thereof. In addition, the progress of each CE stage can be displayed in different colors according to the degree of achievement (for example, 4 steps).

The CE stage list can be presented to the customer Y00 as an analysis report, and may be used to draw out the independence of the customer Y00 in order to achieve a desired purpose and target, or used for verification of the degree of achievement of the CE stage, etc., as necessary.

In one embodiment, for example, as shown in FIG. 6, since the degree of achievement of the CE stage CE03 is 33%, it is desirable that the information providing activity in the CE stage CE03 is repeated.

The CE stage CE10 is an example of providing necessary invitation information in response to a request from the customer Y02 by giving priority to the CE stages CE04 to CE09, and the degree of achievement is 37%.

The CE stages CE01 to CE10 may be scored for multiple CE stages simultaneously.

In the case of the CE stage that is unlikely to be cleared even by repeated information providing activities, it is also possible to actively change the available channel, the content, the CE stage, and the like.

The CE stage in one embodiment is not limited to 10 stages of the CE01 to CE10, and can be increased or decreased depending on, for example, the status of the customer Y00 (changes in economic conditions and tax systems), the circumstances of the manager Ja1 or the person in charge Jb1, and the like.

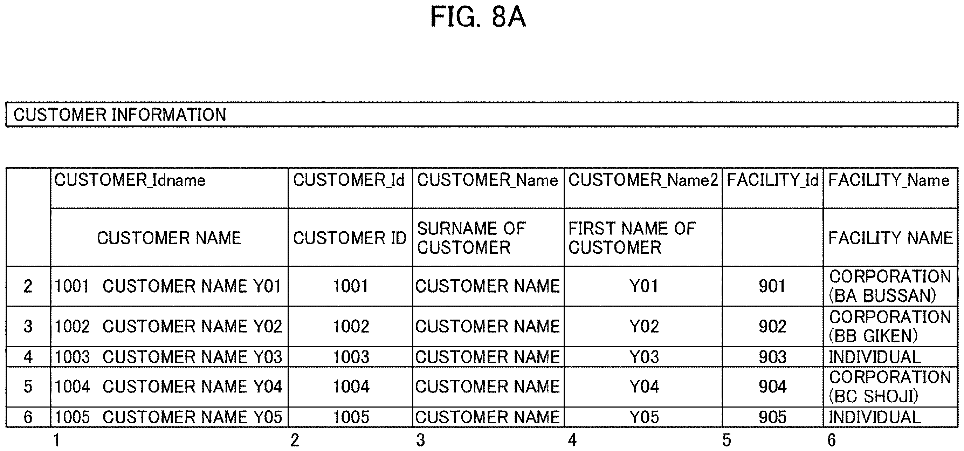

FIGS. 8A to 8D show customer information in concrete terms using automobile sales as an example.

As the customer information, for example, as shown in FIG. 8A, "Customer_Idname", "Customer Id", "Customer _ Name", "Customer_Name2", "Facility_Id", and "Facility Name" are provided for each customer Y00. The customer name is registered in "Customer_Idname", the customer ID is registered in "Customer_Id", the surname of a customer is registered in "Customer Name", the first name of a customer is registered in "Customer_Name2", the facility (work place, etc.) ID is registered in "Facility_Id", and the facility name (office name, etc.) is registered in "Facility_Name".

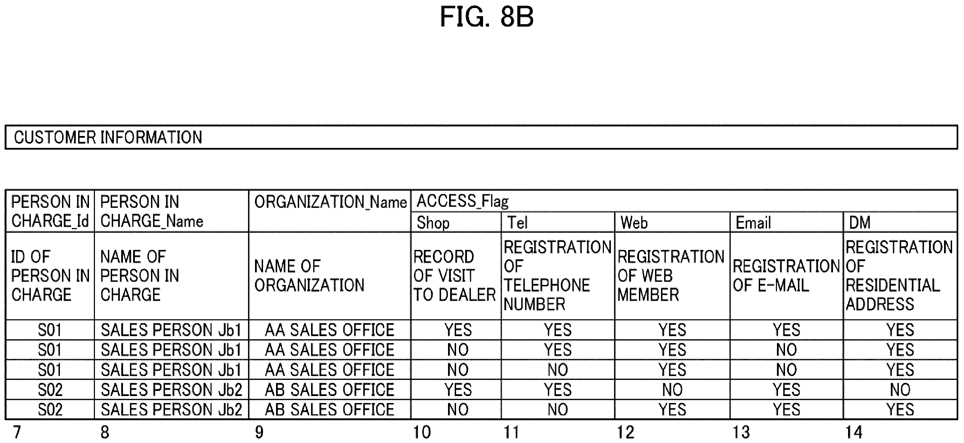

As the customer information, for example, as shown in FIG. 8B, "Person in charge_Id", "Person in charge_Name", "Organization_Name", and "Access_Flag" are provided for each customer Y00. The person in charge (sales person) is registered in "Person in charge_Id", the name of a person in charge is registered in "Person in charge_name", the name of an organization (sales office name) to which the person in charge belongs is registered in the "Organization_Name", and whether not there is a channel that can be utilized is registered in the "Access_Flag".

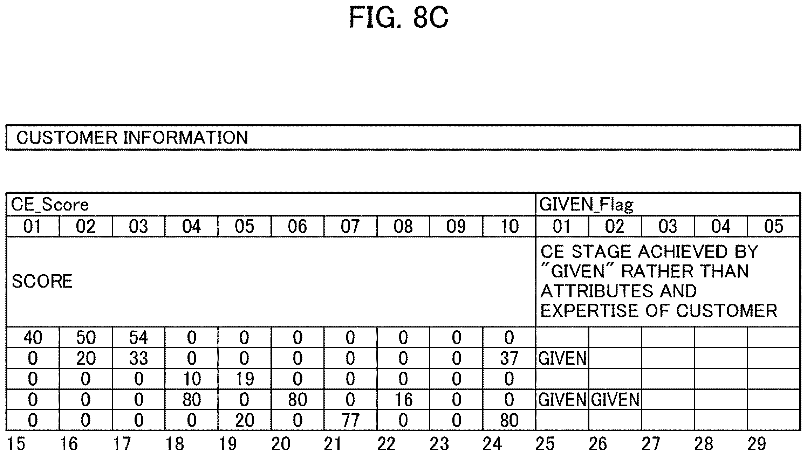

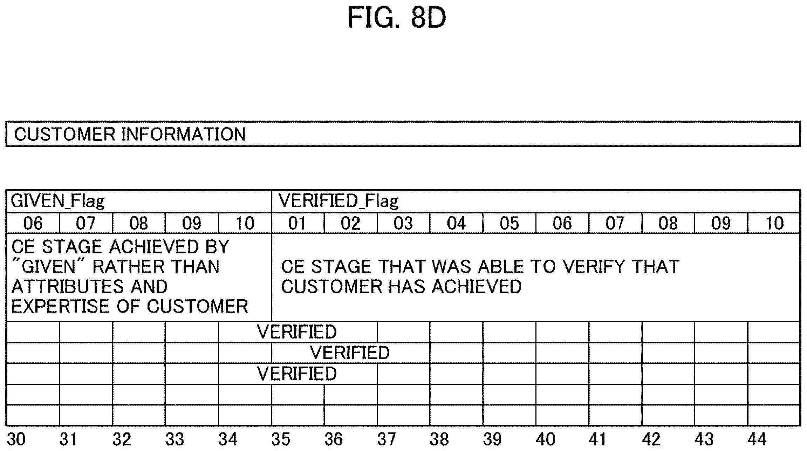

As the customer information, for example, as shown in FIGS. 8C and 8D, "CE_Score", "Given Flag", and "Verified_Flag" are provided for each customer Y00. The degree of achievement for each CE stage is registered in "CE_Score", "given" is registered in "Given_Flag" for the CE stage achieved by "given", and "verified" is registered in Verified Flag" for the CE stage that has verified the achievement.

In FIGS. 8A to 8D, the details of the CE stages described above are reflected in "CE_Score", "Given Flag", and "Verified_Flag" (See, for example, FIG. 7).

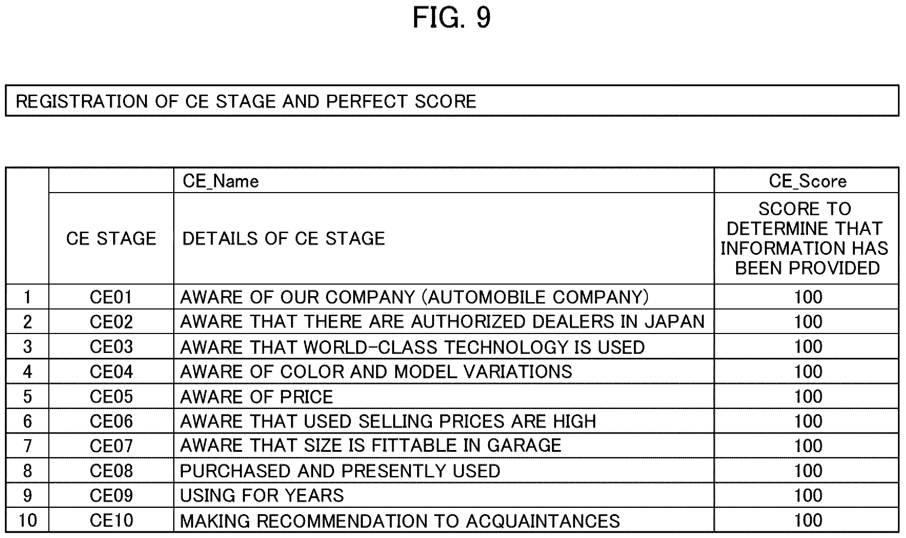

FIG. 9 shows an example of registering a perfect score for each CE stage in the case of automobile sales.

The perfect score is a criterion for determining whether or not the invitation information to be provided in each of the CE stages CE01 to CE10 has been provided, and for example, "100" is registered as "CE_Score".

For example, "100" is registered in "CE_Score" for all of the CE stages CE01 to CE 10.

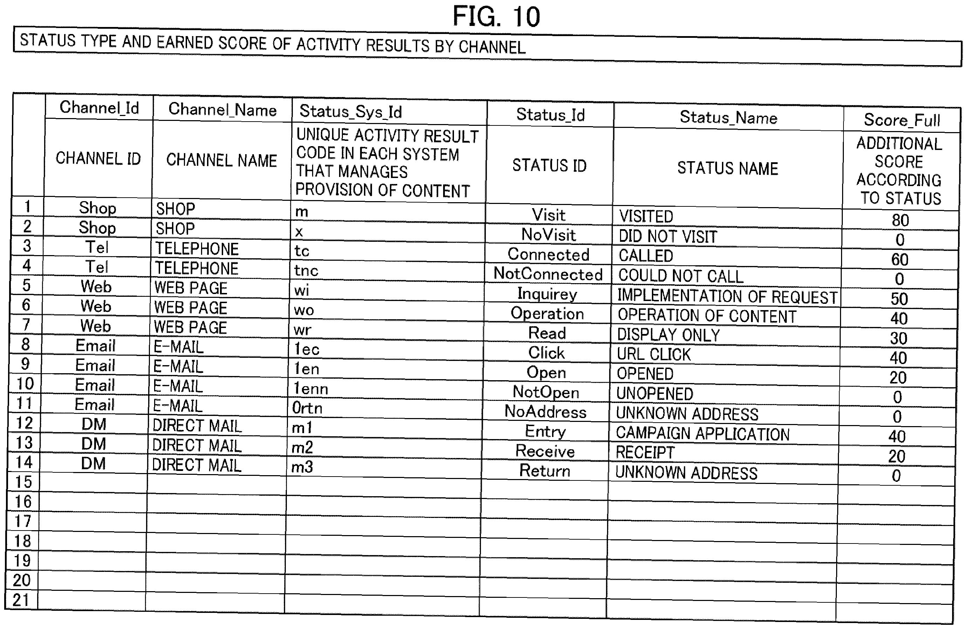

FIG. 10 shows the results of the information providing activities (relationship between status and earned score by channel) using automobile sales as an example.

Here, for example, as shown in FIG. 10, "Channel_Id", "Channel Name", "Status_Sys_Id", "Status_Id", "Status Name", and "Score_Full" correspond to each other.

"Channel_Id" is an identification ID of a channel, and for example, "Shop", "Tel", "Web", "E-mail", and "DM" are prepared.

"Channel_Name" is a name assigned to each channel. For example, "Shop" corresponds to "Shop", "telephone" corresponds to "Tel", "Web Page" corresponds to "Web", "e-mail" corresponds to "E-mail", and "direct mail" corresponds to "DM".

"Status_Sys_Id" is a unique code in each IT system (omitted) that manages the provision of content. For example, any one of "m/x" corresponds to "Shop", any one of "tc/tnc" corresponds to "Tel", and any one of "wi/wo/wr" corresponds to "Web". Further, any one of "1ec/1en/1enn/0rtn" corresponds to "E-mail" and any one of "m1/m2/m3" corresponds to "DM".

"Status_Id" is an identification ID of the status, and corresponds to a response (results of information delivery activities by channel) of the customer Y00 with respect to the information provision. For example, in "Shop", "Visit" corresponds to "m" and "No Visit" corresponds to "x". For example, in "Tel", "Connected" corresponds to "tc", and "Not Connected" corresponds to "tnc". For example, in "Web", "Inquiry" corresponds to "wi", "Operation" corresponds to "wo", and "Read" corresponds to "wr". Further, in "E-mail", "Click" corresponds to "1ec", "Open" corresponds to "1en", "Not Open" corresponds to "1enn", and "No Address" corresponds to "0rtn". Further, in "DM", "Entry" corresponds to "m1", "Receive" corresponds to "m2", and "Return" corresponds to "m3".

"Status_Name" is a name assigned to each status. For example, "Visit" corresponds to "visited", and "No Visit" corresponds to "did not visit". Further, "Connected" corresponds to "called" and "Not Connected" corresponds to "could not call". Further, "Inquiry" corresponds to "implementation of request", "Operation" corresponds to "operation of content ", and "Read" corresponds to "display only". Further, "Click" corresponds to "URL click", "Open" corresponds to "opened", "Not Open" corresponds to "unopened", and "No Address" corresponds to "unknown address". Further, "Entry" corresponds to "campaign application", "Receive" corresponds to "receipt", and "Return" corresponds to "unknown address".

"Score_Full" is a score for addition according to the status, and is a result of scoring by using, for example, the scoring table Tb1 shown in FIG. 1. For example, "80" is assigned to "Visit" and "0" is assigned to "No Visit". Further, "60" is assigned to "Connected" and "0" is assigned to "Not Connected". Further, "50" is assigned to "Inquiry", "40" is assigned to "Operation", and "30" is assigned to "Read". Further, "40" is assigned to "Click", "20" is assigned to "Open", "0" is assigned to "Not Open", and "No Address" is assigned "0". Further, "40" is assigned to "Entry", "20" is assigned to "Receive", and "0" is assigned to "Return".

"Score_Full" and "Channel_Id" are examples, and can be arbitrarily set by the manager Ja1, for example.

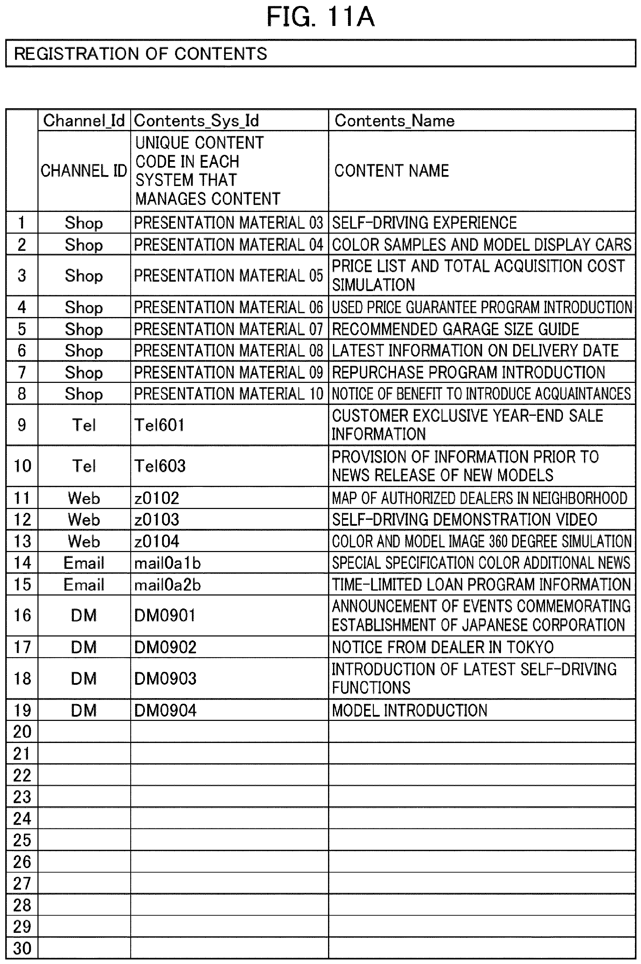

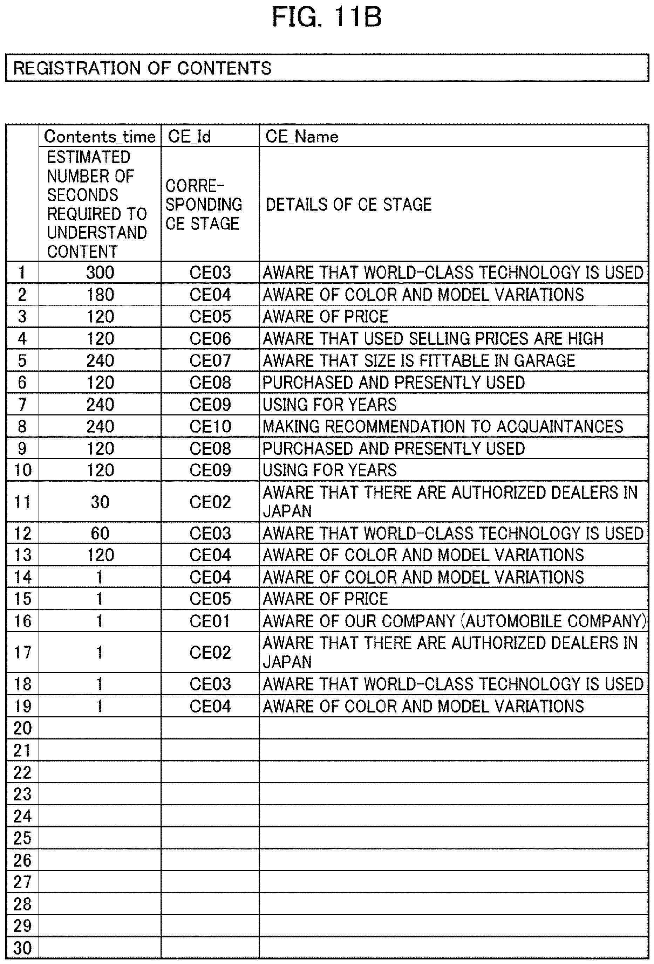

FIGS. 11A and 11B show a registration of contents using automobile sales as an example.

In the content registration, for example, as shown in FIGS. 11A and 11B, "Channel_Id", "Contents_Sys_Id", "Contents_Name", "Contents_time", "CE_Id" and "CE Name" correspond to each other.

"Channel_Id" is an identification ID of a channel, and "Shop", "Tel", "Web", "E-mail", and "DM" are prepared.

"Contents_Sys_Id" is a unique code in each IT system that manages content. For example, any one of "presentation materials 03 to 10" corresponds to "Shop", any one of "Tel 601/Tel 603" corresponds to "Tel", and any one of "z0102/z0103/z0104" corresponds to "Web". Further, any one of "mail0a1b/mail0a2b" corresponds to "E-mail" and any one of "DM0901/DM0902/DM0903/DM0904" corresponds to "DM".

"Contents_Name" is a name given to each content. For example, "presentation material 03" is described as "self-driving experience" in the shop, "presentation material 04" is described as "color samples and model display cars" in the shop, and "presentation material 05" is described as "price list and total acquisition cost simulation" in the shop. "Presentation material 06" is described as "used price guarantee program introduction" in the shop, "presentation material 07" is described as "recommended garage size guide" in the shop, and "presentation material 08" is described as "latest information on delivery date" in the shop. "Presentation material 09" is described as "repurchase program introduction" in the shop, and "presentation material 10" is described as "notice of benefit to introduce acquaintances" in the shop. "Tel 601" is described as "customer exclusive year-end sale information" by telephone, and "Tel 603" is described as "provision of information prior to news release of new models" by telephone. "z0102" is described as "map of authorized dealers in neighborhood" on a Web page, "z0103" is described as "self-driving demonstration video" on a Web page, and "z0104" is described as "color and model image 360 degree simulation" on a Web page. "mail0a1b" is described as "special specification color additional news" by e-mail, and "mail0a2b" is described as "time-limited loan program information" by e-mail. "DM0901" is described as "announcement of events commemorating establishment of Japanese corporation" by direct mail and "DM0902" is described as "notice from dealer in Tokyo" by direct mail. "DM0903" is described as "introduction of latest self-driving functions" by direct mail and "DM0904" is described as "model introduction" by direct mail.

"Contents_time" is, for example, the estimated number of seconds required to understand the details of each content. For example, "self-driving experience" is set to "300", "color samples and model display cars" is set to "180", and "price list and total acquisition cost simulation" is set to "120". "Used price guarantee program introduction" is set to "120", "recommended garage size guide" is set to "240", and "latest information on delivery date" is set to "120". "Repurchase program Introduction" is set to "240", and "notice of benefit to introduce acquaintances" is set to "240". "Customer exclusive year-end sale information" is set to "120", and "provision of information prior to news release of new models" is set to "120". "Map of authorized dealers in neighborhood" is set to "30", "self-driving demonstration video" is set to "60" and "color and model image 360 degree simulation" is set to "120". "Special specification color additional news", "time-limited loan program information", "announcement of events commemorating establishment of Japanese corporation", "notice from dealer in Tokyo", "introduction of latest self-driving functions" and "model introduction" are all set to "1".

"CE_Id" is an identification ID of the corresponding CE stage. For example, "presentation material 03" is described as "CE03", "presentation material 04" is described as "CE04", and "presentation material 05" is described as "CE05". "Presentation material 06" is described as "CE06" "presentation material 07" is described as "CE07" and "presentation material 08" is described as "CE08". "Presentation material 09" is described as "CE09" and "presentation material 10" is described as "CE10". "Tel 601" is described as "CE08" and "Tel 603" is described as "CE09". "z0102" is described as "CE02", "z0103" is described as "CE03" and "z0104" is described as "CE04". "mail0a1b" is described as "CE04" and "mail0a2b" is described as "CE05". "DM0901" is described as "CE01" and "DM0902" is described as "CE02". "DM0903" is described as "CE03" and "DM0904" is described as "CE04".

"CE Name" means the details (references) that customer Y00 should understand at each CE stage. For example, the details of "CE01" are "aware of our company" and the details of "CE02" are "aware of existence of authorized dealers of sales cars (dealers)". The details of "CE03" are "aware that sales cars have world-class technology" and the details of "CE04" are "aware of lineup of sales cars". The details of "CE05" are "aware of price of sales cars" and the details of "CE06" are "aware that used sales cars are traded at high prices". The details of "CE07" are "aware that size of sales car is fittable in garage" and the details of "CE08" are "sales car has already been purchased". The details of "CE09" are "sales car has been used for years" and the details of "CE10" are "recommend sales car to acquaintances".

In this way, time (Contents_time) that is considered to be necessary for understanding the details of each content code (Contents_Sys_Id) are preset by, for example, the manager Ja1.

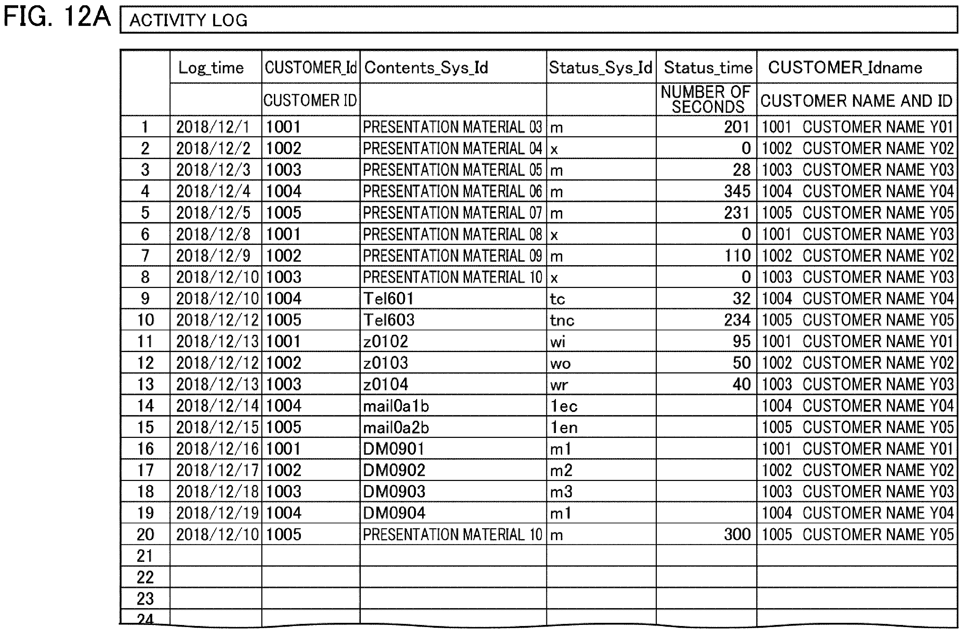

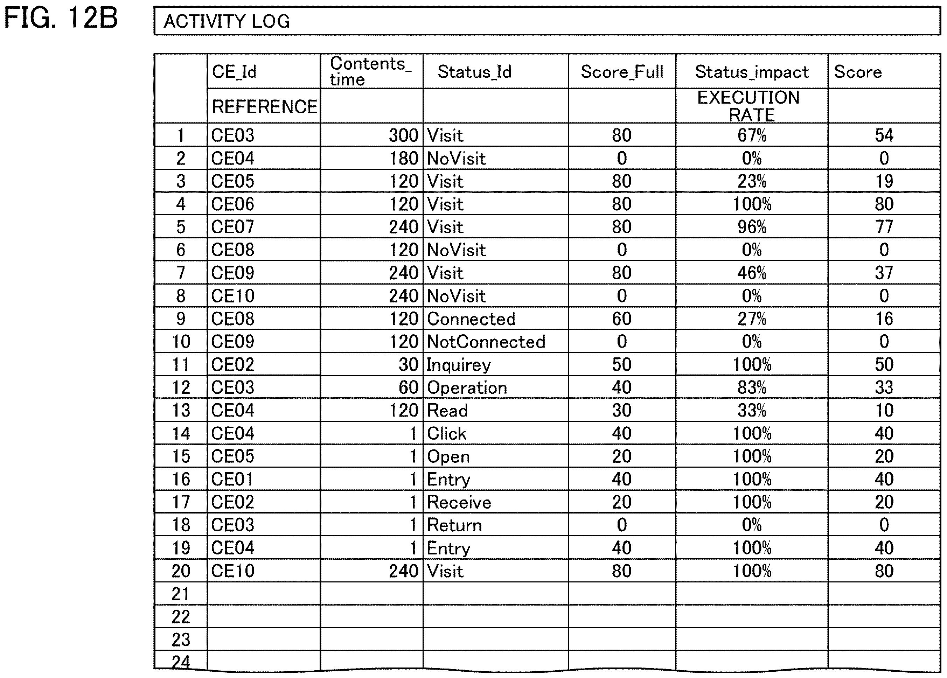

FIGS. 12A and 12B show a log management method associated with information providing activities using automobile sales as an example.

For example, "Log_time", "Customer_Id", "Contents_Sys_Id", "Status_Sys_Id", "Status_time", "Customer_Idname", "CE_Id", "Contents_time", "Status_Id", "Score_Full", "Status impact", and "Score" correspond to each other as logs.

"Log_time" is an activity date and "Status time" is the number of seconds required to understand the details of the CE stage. "Status_impact" is an execution rate (Status_time □ Contents_time), and "Score" is a degree of achievement calculated based on "Score_Full" and "Status_impact".

As is clear from FIGS. 12A and 12B, based on "Score" calculated from "Score_Full" and the "Status_impact", a level of understanding (degree of achievement) for each CE stage CE01 to CE10 of each customer Y00 can be easily estimated.

For example, it is assumed that the customer Y03 whose customer_Id is "1003" and the customer Y05 whose customer_Id is "1005" try to be provided with information by "presentation material 10" at the time of visit. However, it is assumed in 2018/12/10 (Log time) that customer Y03 did not visit the dealer (Status_Sys_Id = "x"), and that, in the end, the invitation information having the details that the CE stage set to CE10 is provided only to the customer Y05 who has visited the dealer (Status_time is "300").

As a result, "Score" of the customer Y03 corresponding to "presentation material 10" is set to "0", while "Score" of the customer Y05 corresponding to "presentation material 10" is set to "80". Therefore, it can be easily determined that at least the level of understanding of the customer Y05 with respect to the CE stage CE10 is at a sufficient level.

As described above, according to the present embodiment, it is possible to quantitatively determine a degree of achievement of a customer's level of understanding for information provision with respect to a purpose and a target to be achieved, and to effectively support a development of the customer for achieving the purpose and target.

That is, when information providing activities (appeal activities) for encouraging customers to purchase goods or use services are performed in steps, a level of understanding of the customers with respect to the information provision is digitalized. Thus, it becomes possible to easily understand what is the most optimal as information that should be newly provided to a customer so as to achieve a desired purpose and target in information providing activities for encouraging customer's purchasing behavior. Therefore, in order to achieve the purpose and target, a return on investment (ROI) related to the development can be enhanced, and the development of customers for purchasing behavior can be effectively supported.

By presenting the results of the information providing activities (analysis report), even in the case of customers who are not aware of purchase behavior in the first place, a purpose and a target can be clarified, and it becomes possible to have the customers themselves voluntarily participate in achieving the purpose and target with a sense of satisfaction. As a result, it is possible to improve the efficiency of customer development.

It becomes possible to comprehensively utilize a plurality of channels for providing information, which was impossible when combining the plurality of channels for providing information such as a website and an e-mail with a CRM (Customer Relationship Management) system. As a result, it is possible to develop a customer by taking into account variations in a level of understanding (degree of achievement) of the customer with respect to each piece of information provided from different channels. In other words, it is possible to comprehensively collect and analyze a history of information provision to the customers, and as a result, inefficiencies such as repeatedly providing known information or providing information that is not of interest can be eliminated.

In addition, since a manager and a person in charge recognize and share the results of information providing activities (analysis report), appropriate information can be provided in light of an actual difference from a plan to be provided by the manager. As a result, it is possible to reduce an extra time and cost necessary for achieving a purpose and a target in developing customers.

By making it possible to share the results of information providing activities (analysis report) within the workplace, it is possible to increase the efficiency of work such as handover to colleagues (third party) (so-called sharing function).

In the case of performing automobile sales shown as one embodiment of the invention, it is possible to expect an increase in the purchasing behavior of a customer and a shortening of the period until the closing of the contract, and to further deepen the relationship between the customer and the dealer, for example. Therefore, not only the purchase of a new car, but also the ordering of repairs to a dealer and the introduction of acquaintances can be expected, and a continuous purchase of company's cars can be expected to improve a skill level of driving operability and reduce the number of accidents or breakdowns caused by operational errors.

The information providing activity can also be applied to a case in which, after an overall explanation of the purchasing behavior for the purchase of goods or the use of services is given in advance, that is, all information is provided in advance, and as an additional explanation, necessary information is selectively provided according to a level of understanding of a customer.

As one embodiment of the invention, the case of selling an automobile (purchase of goods) is exemplified, but the present invention is not limited thereto. For example, the present invention can also be applied to the use of various services such as entering a cram school (private school), joining the gym, or participating in company training.

It can also be applied to a technical support for general job functions, and to support of succession issues for traditional job functions such as apprenticeship and one-child succession.

It can also be applied to information providing activities in housing supply companies (real estate agent) that sell, construct, or renovate houses (detached houses, condominiums, villas, etc.), insurance companies, ceremonial halls for ceremonial occasions, medical institutions (pharmaceutical industry), or various schools.

That is, not only in the automobile industry but also, for example, in the medical field, it becomes possible to easily avoid waste such that information provided to a specific HCP (Health-care professional) by an MR (Medical Representative) of a pharmaceutical company is already known to the HCP. As a result, the limited visiting hours can be effectively utilized, leading to the purchase of pharmaceuticals and medical devices (prescription).

The results of the information providing activities (analysis report) are not limited to the case where they are shared between a manager and a person in charge. For example, in the automobile industry, it is possible to share the results among many companies in the same industry (third party), such as dealers of domestic cars and dealers of foreign cars, and used car dealers.

In some cases, sharing may be possible between multiple companies in different industries (third party), such as between a housing supply company and an automobile dealer. In this case, the appeal activities in several industries can be activated, and consequently the purchasing behavior of the entire industry can be raised.

[Other effects of the invention]

According to the present embodiment, it is possible to shorten a period of time up to the achievement of a desired purpose and target in appeal activities which encourage customers to purchase products or the use of services handled by an information provider. As a result, the information provider can expand the market associated with the improvement of customer evaluation, improve an operational efficiency, or optimize a resource allocation.

According to the present embodiment, not only the customer's satisfaction with a purchase of the product and the use of the service is enhanced, but the quality (for example, richness of life, happiness, etc.) can also be enhanced.

Thus, as part of appeal activities, for example, it is possible to employ a user development support system (CE Stage) in information providing activities performed with respect to a customer in any one of an active or passive form, a direct or indirect form, and a two-way or one-way form.

That is, in the case of a system for developing a customer's purchasing behavior in relation to the purchase of products or use of services, the CE stage can be set according to a policy of information providing activities, for example, according to a marketing plan, a learning curriculum, a training plan, a personnel development policy, etc.

The CE stage is a multifaceted representation of a customer's ultimate purpose and target to be achieved by information provision, and can be abstracted, or embodied and defined at appropriate granularity in terms of customer attributes and strategic relevance and ease of implementation in providing information.

The CE stages may be structured and arranged in series (establish a hierarchy of achievement) or in parallel (have no hierarchy).

By performing verification by an arbitrary method (for example, objective surveys and examinations, interviews with customers, etc.) for each CE stage, it is possible to more accurately determine the degree of achievement of the stage (Verified_Flag Registration, etc.).

The entire contents of Japanese Patent Application No. 2019-061394 (Filing date: March 27, 2019) are incorporated herein.

Although some embodiments of the present invention have been described above, these embodiments are presented as examples and are not intended to limit the scope of the invention. These new embodiments may be implemented in various other forms, and various omissions, substitutions, and modifications may be made without departing from the spirit and scope of the invention. These embodiments and modifications thereof are included in the scope and the gist of the invention and are included in the scope of the claimed invention and the equivalent thereof.

**Claims**

1. A user development support system in which an information provider provides multiple pieces of information in steps, provided that a predetermined degree of achievement is reached in order for a user to achieve a desired purpose and target, the system comprising:

   a storage unit configured to store quantified data in advance in correspondence with the multiple pieces of information and a degree of utilization of the user, the quantified data configured to quantify a level of understanding of the user with respect to each of the multiple pieces of information as a degree of utilization;
   a quantitation unit configured to quantify a degree of utilization of the user with respect to each of the multiple pieces of information at each step providing each of the multiple pieces of information by using the quantified data of the storage unit;
   an analysis unit configured to propose to the information provider based on a result of quantification by the quantification unit, information that is necessary for the user to achieve the desired purpose and target and that is to be newly provided to the user; and
   a proposal unit configured to repeatedly provide the information having the same details until the result of quantification by the quantification unit reaches the predetermined degree of achievement defined in advance, based on a proposal from the analysis unit, by using several media with different types of tools configured to provide the information at each step in which the multiple pieces of information are provided in steps.

2. The user development support system according to claim 1, further comprising:
   a management unit configured to aggregate the quantified data corresponding to a repetition of the information provided by the proposal unit as the result of quantification by the quantification unit at each step in which the multiple pieces of information are provided in steps, as a scoring logic for obtaining the result of the quantification.

3. The user development support system according to claim 2, wherein the management unit includes:

   a communication log table management unit having a communication log table;
   a score table management unit having a score table configured to store the result of the quantification; wherein the communication log table includes a storage area configured to store, at each stage, any of the multiple pieces of information, a date and time of the information provision, the details of the information and a degree of utilization of the information by the user in correspondence with each other;
   the stage defines as an index a level of understanding of the user with respect to the multiple pieces of information at each step in which the multiple pieces of information are provided in steps; and
   the score table includes, for each detail of the information, a storage area configured to store the result of the quantification and flag information indicating as an index the result of the quantification in correspondence with each other.

4.  The user development support system according to claim 1, wherein

    the proposal unit further includes a registration area in which, based on a proposal from the analysis unit, utilization data corresponding to a type of utilizable tool is registered in advance for each stage in which a level of understanding of the user with respect to the multiple pieces of information at each step in which the multiple pieces of information are provided in steps is defined as an index, wherein
    information to be provided at the stage is selected based on the utilization data.

5.  The user development support system according to any one of claims 1 to 4, wherein
    the information provider includes a person in charge and a manager thereof, wherein the system further comprises:

    a user management server updated by the manager and managing identification information of the user; and
    a data collection server connected to the user management server and collecting a level of understanding of the user with respect to each of the multiple pieces of information as a degree of utilization of the user.

6.  The user development support system according to claim 1, wherein
    a proposal of the analysis unit is issued to the information provider and the user as an analysis report.

7.  The user development support system according to claim 6, wherein
    the analysis report is further shared with a third party other than the information provider and the user.

8.  A user development support method in which an information provider provides multiple pieces of information in steps, provided that a predetermined degree of achievement is reached in order for a user to achieve a desired purpose and target, the method comprising:

    quantifying, as a degree of utilization, a level of understanding of the user with respect to each of the multiple pieces of information at each step providing each of the multiple pieces of information by using a storage unit storing quantified data in advance;
    proposing to the information provider, information that is necessary for the user to achieve the desired purpose and target and that is to be newly provided to the user based on a result of the quantification; and
    repeatedly providing the information having the same details until the result of the quantification reaches the predetermined degree of achievement defined in advance, based on the proposal, by using several media with different types of tools configured to provide the information at each step in which the multiple pieces of information are provided in steps.

9.  A user development support program for allowing a computer to execute the user development support system according to any one of claims 1 to 7.

# FIG. 1

EP 3 951 675 A1

# FIG. 2

Y00 — CUSTOMER ←— INFORMATION PROVISION/STATUS —→ J1 — INFORMATION PROVIDER ←— DETAILS OF INFORMATION PROVISION · PROPOSAL OF UTILIZATION CHANNEL

## COMMUNICATION LOG TABLE Tb2

| CE STAGE Tb21 | DATE Tb22 | CONTENT Tb23 | COMMUNI-CATION Tb24 | STATUS Tb25 |
|---|---|---|---|---|
| CE01 | 2018-11-08 | Tel | TELEPHONE | Call |
| CE02(1) | 2018-11-10 | Email | E-MAIL | Open |
| CE02(2) | 2018-11-15 | Web | Web (LECTURE) | Joined |
| CE03 | 2018-11-20 | Web | Web (LECTURE) | Viewed |
| CE04 | 2018-11-21 | Email | E-MAIL | URL CLICK |
| | | | | |
| | | | | |

(CEM)

## SCORING TABLE Tb1

| COMMUNICATION Tb11 | STATUS Tb12 | SCORE Tb13 |
|---|---|---|
| E-MAIL | Open | 20 |
| E-MAIL | URL CLICK | 40 |
| Web (LECTURE) | Viewed | 60 |
| Web (LECTURE) | Joined | 80 |
| TELEPHONE | Call | 100 |

SCORING

## CE SCORE TABLE Tb3

| CE STAGE Tb31 | TOTAL SCORE Tb32 | FLAG Tb33 |
|---|---|---|
| CE01 | 100 | GREEN |
| CE02 | 100 (20+80) | GREEN |
| CE03 | 60 | YELLOW |
| CE04 | 40 | RED |

EP 3 951 675 A1

**FIG. 3**

EP 3 951 675 A1

# FIG. 4

| | CUSTOMER MANAGEMENT | PLANNING OF INFORMATION PROVISION | INFORMATION PROVISION/DATA COLLECTION | ANALYSIS | CONFIRMATION OF ANALYSIS REPORT |
|---|---|---|---|---|---|
| **MANAGER (Ja1)** | UPDATE OF CUSTOMER INFORMATION | ·PLANNING OF INFORMATION PROVISION ·DISTRIBUTION OF CONTENTS | | ·ANALYSIS OF HISTORY OF INFORMATION PROVISION ·UPDATE OF CE STAGE | ANALYSIS OF CEM CONFIRMATION OF RESULT ·INSTRUCTION/ SHARE |
| **PERSON IN CHARGE (Jb1)** | | | SELECTION OF CONTENT AND CHANNEL BASED ON CE STAGE OF CUSTOMER | INFORMATION PROVISION TO CUSTOMER AND RECORD THEREOF | ANALYSIS OF CEM CONFIRMATION OF RESULT |
| **Y00 CUSTOMER** | | | | RECEIPT OF INFORMATION | ANALYSIS OF CEM CONFIRMATION OF RESULT |

ACHIEVE-MENT OF PURPOSE AND TARGET

EP 3 951 675 A1

# FIG. 5

**CUSTOMER INFORMATION**

| CUSTOMER | 1002 CUSTOMER NAME Y02 (PULL-DOWN SELECTION) | PERSON IN CHARGE OF CUSTOMER | SALES PERSON Jb1 |

PLACE OF EMPLOYMENT: CORPORATION (BB GIKEN)  ORGANIZATION: AA SALES OFFICE

**CE STAGE LIST**

| CE STAGE | DEGREE OF ACHIEVE-MENT | DETAILS OF CE STAGE | CHANNEL ACCESS | Shop RECORD OF VISIT TO DEALER (NO) | Tel REGISTRATION OF TELEPHONE NUMBER (YES) | Web REGISTRATION OF WEB MEMBER (YES) | E-MAIL REGISTRATION OF E-MAIL ADDRESS (NO) | DM REGISTRATION OF RESIDENTIAL ADDRESS (YES) |
|---|---|---|---|---|---|---|---|---|
| CE01 | GIVEN | AWARE OF OUR COMPANY (AUTOMOBILE COMPANY) | CONTENT | | | | | YES |
| CE02 | VERIFIED | AWARE THAT THERE ARE AUTHORIZED DEALERS IN JAPAN | CONTENT | | | YES | | YES |
| CE03 | 33% | AWARE THAT WORLD-CLASS TECHNOLOGY IS USED | CONTENT | YES | | YES | | YES |
| CE04 | 0% | AWARE OF COLOR AND MODEL VARIATIONS | CONTENT | YES | | YES | YES | YES |
| CE05 | 0% | AWARE OF PRICE | CONTENT | YES | | | YES | |
| CE06 | 0% | AWARE THAT USED SELLING PRICES ARE HIGH | CONTENT | YES | | | | |
| CE07 | 0% | AWARE THAT SIZE IS FITTABLE IN GARAGE | CONTENT | YES | | | | |
| CE08 | 0% | PURCHASED AND PRESENTLY USED | CONTENT | YES | YES | | | |
| CE09 | 0% | USING FOR YEARS | CONTENT | YES | YES | | | |
| CE10 | 37% | MAKING RECOMMENDATION TO ACQUAINTANCES | CONTENT | YES | | | | |

EXPLANATORY NOTE

VERIFIED  SEPARATELY VERIFIED THAT CUSTOMER HAS ACHIEVED THE CE STAGE
GIVEN  CE STAGE THAT CUSTOMER SEEMS TO HAVE ACHIEVED BY "GIVEN"
DEGREE OF ACHIEVEMENT 80% OR MORE
LESS THAN 80%, 40% OR MORE
LESS THAN 40% (EXCEPT 0)

EP 3 951 675 A1

# FIG. 6

**CUSTOMER INFORMATION**

CUSTOMER 1002 CUSTOMER NAME Y02 PERSON IN CHARGE OF CUSTOMER SALES PERSON Jb1

PLACE OF EMPLOYMENT CORPORATION (BB GIKEN) ORGANIZATION AA SALES OFFICE

**CE STAGE MAP**

| CE01 | CE02 | CE03 | CE04 |
|---|---|---|---|
| GIVEN 0% | VERIFIED 20% | 33% | 0% |
| AWARE OF OUR COMPANY (AUTOMOBILE COMPANY) | AWARE THAT THERE ARE AUTHORIZED DEALERS IN JAPAN | AWARE THAT WORLD-CLASS TECHNOLOGY IS USED | AWARE OF COLOR AND MODEL VARIATIONS |

| CE05 | CE06 | CE07 |
|---|---|---|
| 0% | 0% | 0% |
| AWARE OF PRICE | AWARE THAT USED SELLING PRICES ARE HIGH | AWARE THAT SIZE IS FITTABLE IN GARAGE |

| CE08 | CE09 | CE10 |
|---|---|---|
| 0% | 0% | 37% |
| PURCHASED AND PRESENTLY USED | USING FOR YEARS | MAKING RECOMMENDATION TO ACQUAINTANCES |

EXPLANATORY NOTE

| | |
|---|---|
| VERIFIED | SEPARATELY VERIFIED THAT CUSTOMER HAS ACHIEVED THE CE STAGE |
| GIVEN | CE STAGE THAT CUSTOMER SEEMS TO HAVE ACHIEVED BY "GIVEN" |
| | DEGREE OF ACHIEVEMENT 80% OR MORE |
| | LESS THAN 80%, 40% OR MORE |
| | LESS THAN 40% (EXCEPT 0) |

EP 3 951 675 A1

# FIG. 7

EP 3 951 675 A1

**CUSTOMER INFORMATION**

| CUSTOMER | All | (ALL TGS ARE DISPLAYED) | PERSON IN CHARGE OF CUSTOMER | SALES PERSON Jb1 |
|---|---|---|---|---|
| PLACE OF EMPLOYMENT | All | | ORGANIZATION | AA SALES OFFICE |

**CE STAGE LIST**

| | | | (ALL FIVE CUSTOMERS) | CE01 | CE02 | CE03 | CE04 | CE05 | CE06 | CE07 | CE08 | CE09 | CE10 |
|---|---|---|---|---|---|---|---|---|---|---|---|---|---|
| DETAILS | AA SALES OFFICE | SALES PERSON Jb1 | VERIFIED + GIVEN | 4 | 2 | | | | | | | | |
| | | | DEGREE OF ACHIEVEMENT 80% OR MORE | | | | 1 | | 1 | | | | 1 |
| | | | LESS THAN 80%, 40% OR MORE | | 1 | 1 | | | | 1 | | | |
| | | | LESS THAN 40% (EXCEPT 0) | | | 1 | 1 | 2 | | | 1 | | 1 |

| | ORGANIZATION | PERSON IN CHARGE OF CUSTOMER | | CUSTOMER | PLACE OF EMPLOYMENT | CE01 | CE02 | CE03 | CE04 | CE05 | CE06 | CE07 | CE08 | CE09 | CE10 |
|---|---|---|---|---|---|---|---|---|---|---|---|---|---|---|---|
| DETAILS | AA SALES OFFICE | SALES PERSON Jb1 | 1001 | CUSTOMER NAME Y01 | CORPORATION (BA BUSSAN) | VERIFIED | 50% | 54% | | | | | | | |
| | AA SALES OFFICE | SALES PERSON Jb1 | 1002 | CUSTOMER NAME Y02 | CORPORATION (BB GIKEN) | GIVEN | VERIFIED | 33% | | | | | | | 37% |
| | AA SALES OFFICE | SALES PERSON Jb1 | 1003 | CUSTOMER NAME Y03 | INDIVIDUAL | VERIFIED | | | 10% | 19% | | | | | |
| | AA SALES OFFICE | SALES PERSON Jb1 | 1004 | CUSTOMER NAME Y04 | CORPORATION (BC SHOJI) | GIVEN | GIVEN | | 80% | | 80% | | 16% | | |
| | AA SALES OFFICE | SALES PERSON Jb1 | 1005 | CUSTOMER NAME Y05 | INDIVIDUAL | | | | | 20% | | 77% | | | 80% |

# FIG. 8A

EP 3 951 675 A1

CUSTOMER INFORMATION

| | CUSTOMER_Idname | CUSTOMER_Id | CUSTOMER_Name | CUSTOMER_Name2 | FACILITY_Id | FACILITY_Name |
|---|---|---|---|---|---|---|
| | CUSTOMER NAME | CUSTOMER ID | SURNAME OF CUSTOMER | FIRST NAME OF CUSTOMER | | FACILITY NAME |
| 2 | 1001  CUSTOMER NAME Y01 | 1001 | CUSTOMER NAME | Y01 | 901 | CORPORATION (BA BUSSAN) |
| 3 | 1002  CUSTOMER NAME Y02 | 1002 | CUSTOMER NAME | Y02 | 902 | CORPORATION (BB GIKEN) |
| 4 | 1003  CUSTOMER NAME Y03 | 1003 | CUSTOMER NAME | Y03 | 903 | INDIVIDUAL |
| 5 | 1004  CUSTOMER NAME Y04 | 1004 | CUSTOMER NAME | Y04 | 904 | CORPORATION (BC SHOJI) |
| 6 | 1005  CUSTOMER NAME Y05 | 1005 | CUSTOMER NAME | Y05 | 905 | INDIVIDUAL |

1　　　　　2　　　　　3　　　　　4　　　　　5　　　　　6

EP 3 951 675 A1

# FIG. 8B

CUSTOMER INFORMATION

| PERSON IN CHARGE_Id | PERSON IN CHARGE_Name | ORGANIZATION_Name | ACCESS_Flag | | | | |
| --- | --- | --- | --- | --- | --- | --- | --- |
| | | | Shop | Tel | Web | Email | DM |
| ID OF PERSON IN CHARGE | NAME OF PERSON IN CHARGE | NAME OF ORGANIZATION | RECORD OF VISIT TO DEALER | REGISTRATION OF TELEPHONE NUMBER | REGISTRATION OF WEB MEMBER | REGISTRATION OF E-MAIL | REGISTRATION OF RESIDENTIAL ADDRESS |
| S01 | SALES PERSON Jb1 | AA SALES OFFICE | YES | YES | YES | YES | YES |
| S01 | SALES PERSON Jb1 | AA SALES OFFICE | NO | YES | YES | NO | YES |
| S01 | SALES PERSON Jb1 | AA SALES OFFICE | NO | NO | YES | NO | YES |
| S02 | SALES PERSON Jb2 | AB SALES OFFICE | YES | YES | NO | YES | NO |
| S02 | SALES PERSON Jb2 | AB SALES OFFICE | NO | NO | YES | YES | YES |
| 7 | 8 | 9 | 10 | 11 | 12 | 13 | 14 |

# FIG. 8C

| CUSTOMER INFORMATION |
|---|

| CE_Score | | | | | | | | | | GIVEN_Flag | | | | |
|---|---|---|---|---|---|---|---|---|---|---|---|---|---|---|
| 01 | 02 | 03 | 04 | 05 | 06 | 07 | 08 | 09 | 10 | 01 | 02 | 03 | 04 | 05 |
| SCORE | | | | | | | | | | CE STAGE ACHIEVED BY "GIVEN" RATHER THAN ATTRIBUTES AND EXPERTISE OF CUSTOMER | | | | |
| 40 | 50 | 54 | 0 | 0 | 0 | 0 | 0 | 0 | 0 | | | | | |
| 0 | 20 | 33 | 0 | 0 | 0 | 0 | 0 | 0 | 37 | GIVEN | | | | |
| 0 | 0 | 0 | 10 | 19 | 0 | 0 | 0 | 0 | 0 | | | | | |
| 0 | 0 | 0 | 80 | 0 | 80 | 0 | 16 | 0 | 0 | GIVEN | GIVEN | | | |
| 0 | 0 | 0 | 0 | 20 | 0 | 77 | 0 | 0 | 80 | | | | | |
| 15 | 16 | 17 | 18 | 19 | 20 | 21 | 22 | 23 | 24 | 25 | 26 | 27 | 28 | 29 |

# FIG. 8D

| CUSTOMER INFORMATION |
|---|

| GIVEN_Flag | | | | | VERIFIED_Flag | | | | | | | | | |
|---|---|---|---|---|---|---|---|---|---|---|---|---|---|---|
| 06 | 07 | 08 | 09 | 10 | 01 | 02 | 03 | 04 | 05 | 06 | 07 | 08 | 09 | 10 |
| CE STAGE ACHIEVED BY "GIVEN" RATHER THAN ATTRIBUTES AND EXPERTISE OF CUSTOMER | | | | | CE STAGE THAT WAS ABLE TO VERIFY THAT CUSTOMER HAS ACHIEVED | | | | | | | | | |
| | | | | | VERIFIED | | | | | | | | | |
| | | | | | | VERIFIED | | | | | | | | |
| | | | | | VERIFIED | | | | | | | | | |
| | | | | | | | | | | | | | | |
| | | | | | | | | | | | | | | |

30  31  32  33  34  35  36  37  38  39  40  41  42  43  44

EP 3 951 675 A1

# FIG. 9

| REGISTRATION OF CE STAGE AND PERFECT SCORE |
|---|

| | | CE_Name | CE_Score |
|---|---|---|---|
| | CE STAGE | DETAILS OF CE STAGE | SCORE TO DETERMINE THAT INFORMATION HAS BEEN PROVIDED |
| 1 | CE01 | AWARE OF OUR COMPANY (AUTOMOBILE COMPANY) | 100 |
| 2 | CE02 | AWARE THAT THERE ARE AUTHORIZED DEALERS IN JAPAN | 100 |
| 3 | CE03 | AWARE THAT WORLD-CLASS TECHNOLOGY IS USED | 100 |
| 4 | CE04 | AWARE OF COLOR AND MODEL VARIATIONS | 100 |
| 5 | CE05 | AWARE OF PRICE | 100 |
| 6 | CE06 | AWARE THAT USED SELLING PRICES ARE HIGH | 100 |
| 7 | CE07 | AWARE THAT SIZE IS FITTABLE IN GARAGE | 100 |
| 8 | CE08 | PURCHASED AND PRESENTLY USED | 100 |
| 9 | CE09 | USING FOR YEARS | 100 |
| 10 | CE10 | MAKING RECOMMENDATION TO ACQUAINTANCES | 100 |

## FIG. 10

EP 3 951 675 A1

STATUS TYPE AND EARNED SCORE OF ACTIVITY RESULTS BY CHANNEL

| | Channel_Id | Channel_Name | Status_Sys_Id | Status_Id | Status_Name | Score_Full |
|---|---|---|---|---|---|---|
| | CHANNEL ID | CHANNEL NAME | UNIQUE ACTIVITY RESULT CODE IN EACH SYSTEM THAT MANAGES PROVISION OF CONTENT | STATUS ID | STATUS NAME | ADDITIONAL SCORE ACCORDING TO STATUS |
| 1 | Shop | SHOP | m | Visit | VISITED | 80 |
| 2 | Shop | SHOP | x | NoVisit | DID NOT VISIT | 0 |
| 3 | Tel | TELEPHONE | tc | Connected | CALLED | 60 |
| 4 | Tel | TELEPHONE | tnc | NotConnected | COULD NOT CALL | 0 |
| 5 | Web | WEB PAGE | wi | Inquirey | IMPLEMENTATION OF REQUEST | 50 |
| 6 | Web | WEB PAGE | wo | Operation | OPERATION OF CONTENT | 40 |
| 7 | Web | WEB PAGE | wr | Read | DISPLAY ONLY | 30 |
| 8 | Email | E-MAIL | 1ec | Click | URL CLICK | 40 |
| 9 | Email | E-MAIL | 1en | Open | OPENED | 20 |
| 10 | Email | E-MAIL | 1enn | NotOpen | UNOPENED | 0 |
| 11 | Email | E-MAIL | 0rtn | NoAddress | UNKNOWN ADDRESS | 0 |
| 12 | DM | DIRECT MAIL | m1 | Entry | CAMPAIGN APPLICATION | 40 |
| 13 | DM | DIRECT MAIL | m2 | Receive | RECEIPT | 20 |
| 14 | DM | DIRECT MAIL | m3 | Return | UNKNOWN ADDRESS | 0 |
| 15 | | | | | | |
| 16 | | | | | | |
| 17 | | | | | | |
| 18 | | | | | | |
| 19 | | | | | | |
| 20 | | | | | | |
| 21 | | | | | | |

# FIG. 11A

REGISTRATION OF CONTENTS

| | Channel_Id | Contents_Sys_Id | Contents_Name |
|---|---|---|---|
| | CHANNEL ID | UNIQUE CONTENT CODE IN EACH SYSTEM THAT MANAGES CONTENT | CONTENT NAME |
| 1 | Shop | PRESENTATION MATERIAL 03 | SELF-DRIVING EXPERIENCE |
| 2 | Shop | PRESENTATION MATERIAL 04 | COLOR SAMPLES AND MODEL DISPLAY CARS |
| 3 | Shop | PRESENTATION MATERIAL 05 | PRICE LIST AND TOTAL ACQUISITION COST SIMULATION |
| 4 | Shop | PRESENTATION MATERIAL 06 | USED PRICE GUARANTEE PROGRAM INTRODUCTION |
| 5 | Shop | PRESENTATION MATERIAL 07 | RECOMMENDED GARAGE SIZE GUIDE |
| 6 | Shop | PRESENTATION MATERIAL 08 | LATEST INFORMATION ON DELIVERY DATE |
| 7 | Shop | PRESENTATION MATERIAL 09 | REPURCHASE PROGRAM INTRODUCTION |
| 8 | Shop | PRESENTATION MATERIAL 10 | NOTICE OF BENEFIT TO INTRODUCE ACQUAINTANCES |
| 9 | Tel | Tel601 | CUSTOMER EXCLUSIVE YEAR-END SALE INFORMATION |
| 10 | Tel | Tel603 | PROVISION OF INFORMATION PRIOR TO NEWS RELEASE OF NEW MODELS |
| 11 | Web | z0102 | MAP OF AUTHORIZED DEALERS IN NEIGHBORHOOD |
| 12 | Web | z0103 | SELF-DRIVING DEMONSTRATION VIDEO |
| 13 | Web | z0104 | COLOR AND MODEL IMAGE 360 DEGREE SIMULATION |
| 14 | Email | mail0a1b | SPECIAL SPECIFICATION COLOR ADDITIONAL NEWS |
| 15 | Email | mail0a2b | TIME-LIMITED LOAN PROGRAM INFORMATION |
| 16 | DM | DM0901 | ANNOUNCEMENT OF EVENTS COMMEMORATING ESTABLISHMENT OF JAPANESE CORPORATION |
| 17 | DM | DM0902 | NOTICE FROM DEALER IN TOKYO |
| 18 | DM | DM0903 | INTRODUCTION OF LATEST SELF-DRIVING FUNCTIONS |
| 19 | DM | DM0904 | MODEL INTRODUCTION |
| 20 | | | |
| 21 | | | |
| 22 | | | |
| 23 | | | |
| 24 | | | |
| 25 | | | |
| 26 | | | |
| 27 | | | |
| 28 | | | |
| 29 | | | |
| 30 | | | |

# FIG. 11B

REGISTRATION OF CONTENTS

| | Contents_time | CE_Id | CE_Name |
|---|---|---|---|
| | ESTIMATED NUMBER OF SECONDS REQUIRED TO UNDERSTAND CONTENT | CORRE-SPONDING CE STAGE | DETAILS OF CE STAGE |
| 1 | 300 | CE03 | AWARE THAT WORLD-CLASS TECHNOLOGY IS USED |
| 2 | 180 | CE04 | AWARE OF COLOR AND MODEL VARIATIONS |
| 3 | 120 | CE05 | AWARE OF PRICE |
| 4 | 120 | CE06 | AWARE THAT USED SELLING PRICES ARE HIGH |
| 5 | 240 | CE07 | AWARE THAT SIZE IS FITTABLE IN GARAGE |
| 6 | 120 | CE08 | PURCHASED AND PRESENTLY USED |
| 7 | 240 | CE09 | USING FOR YEARS |
| 8 | 240 | CE10 | MAKING RECOMMENDATION TO ACQUAINTANCES |
| 9 | 120 | CE08 | PURCHASED AND PRESENTLY USED |
| 10 | 120 | CE09 | USING FOR YEARS |
| 11 | 30 | CE02 | AWARE THAT THERE ARE AUTHORIZED DEALERS IN JAPAN |
| 12 | 60 | CE03 | AWARE THAT WORLD-CLASS TECHNOLOGY IS USED |
| 13 | 120 | CE04 | AWARE OF COLOR AND MODEL VARIATIONS |
| 14 | 1 | CE04 | AWARE OF COLOR AND MODEL VARIATIONS |
| 15 | 1 | CE05 | AWARE OF PRICE |
| 16 | 1 | CE01 | AWARE OF OUR COMPANY (AUTOMOBILE COMPANY) |
| 17 | 1 | CE02 | AWARE THAT THERE ARE AUTHORIZED DEALERS IN JAPAN |
| 18 | 1 | CE03 | AWARE THAT WORLD-CLASS TECHNOLOGY IS USED |
| 19 | 1 | CE04 | AWARE OF COLOR AND MODEL VARIATIONS |
| 20 | | | |
| 21 | | | |
| 22 | | | |
| 23 | | | |
| 24 | | | |
| 25 | | | |
| 26 | | | |
| 27 | | | |
| 28 | | | |
| 29 | | | |
| 30 | | | |

# FIG. 12A ACTIVITY LOG

|  | Log_time | CUSTOMER_Id | Contents_Sys_Id | Status_Sys_Id | Status_time | CUSTOMER_Idname |
|---|---|---|---|---|---|---|
|  |  | CUSTOMER ID |  |  | NUMBER OF SECONDS | CUSTOMER NAME AND ID |
| 1 | 2018/12/1 | 1001 | PRESENTATION MATERIAL 03 | m | 201 | 1001 CUSTOMER NAME Y01 |
| 2 | 2018/12/2 | 1002 | PRESENTATION MATERIAL 04 | x | 0 | 1002 CUSTOMER NAME Y02 |
| 3 | 2018/12/3 | 1003 | PRESENTATION MATERIAL 05 | m | 28 | 1003 CUSTOMER NAME Y03 |
| 4 | 2018/12/4 | 1004 | PRESENTATION MATERIAL 06 | m | 345 | 1004 CUSTOMER NAME Y04 |
| 5 | 2018/12/5 | 1005 | PRESENTATION MATERIAL 07 | m | 231 | 1005 CUSTOMER NAME Y05 |
| 6 | 2018/12/8 | 1001 | PRESENTATION MATERIAL 08 | x | 0 | 1001 CUSTOMER NAME Y03 |
| 7 | 2018/12/9 | 1002 | PRESENTATION MATERIAL 09 | m | 110 | 1002 CUSTOMER NAME Y02 |
| 8 | 2018/12/10 | 1003 | PRESENTATION MATERIAL 10 | x | 0 | 1003 CUSTOMER NAME Y03 |
| 9 | 2018/12/10 | 1004 | Tel601 | tc | 32 | 1004 CUSTOMER NAME Y04 |
| 10 | 2018/12/12 | 1005 | Tel603 | tnc | 234 | 1005 CUSTOMER NAME Y05 |
| 11 | 2018/12/13 | 1001 | z0102 | wi | 95 | 1001 CUSTOMER NAME Y01 |
| 12 | 2018/12/12 | 1002 | z0103 | wo | 50 | 1002 CUSTOMER NAME Y02 |
| 13 | 2018/12/13 | 1003 | z0104 | wr | 40 | 1003 CUSTOMER NAME Y03 |
| 14 | 2018/12/14 | 1004 | mail0a1b | 1ec |  | 1004 CUSTOMER NAME Y04 |
| 15 | 2018/12/15 | 1005 | mail0a2b | 1en |  | 1005 CUSTOMER NAME Y05 |
| 16 | 2018/12/16 | 1001 | DM0901 | m1 |  | 1001 CUSTOMER NAME Y01 |
| 17 | 2018/12/17 | 1002 | DM0902 | m2 |  | 1002 CUSTOMER NAME Y02 |
| 18 | 2018/12/18 | 1003 | DM0903 | m3 |  | 1003 CUSTOMER NAME Y03 |
| 19 | 2018/12/19 | 1004 | DM0904 | m1 |  | 1004 CUSTOMER NAME Y04 |
| 20 | 2018/12/10 | 1005 | PRESENTATION MATERIAL 10 | m | 300 | 1005 CUSTOMER NAME Y05 |
| 21 |  |  |  |  |  |  |
| 22 |  |  |  |  |  |  |
| 23 |  |  |  |  |  |  |
| 24 |  |  |  |  |  |  |

EP 3 951 675 A1

# FIG. 12B

EP 3 951 675 A1

ACTIVITY LOG

| | CE_Id | Contents_time | Status_Id | Score_Full | Status_impact | Score |
|---|---|---|---|---|---|---|
| | REFERENCE | | | | EXECUTION RATE | |
| 1 | CE03 | 300 | Visit | 80 | 67% | 54 |
| 2 | CE04 | 180 | NoVisit | 0 | 0% | 0 |
| 3 | CE05 | 120 | Visit | 80 | 23% | 19 |
| 4 | CE06 | 120 | Visit | 80 | 100% | 80 |
| 5 | CE07 | 240 | Visit | 80 | 96% | 77 |
| 6 | CE08 | 120 | NoVisit | 0 | 0% | 0 |
| 7 | CE09 | 240 | Visit | 80 | 46% | 37 |
| 8 | CE10 | 240 | NoVisit | 0 | 0% | 0 |
| 9 | CE08 | 120 | Connected | 60 | 27% | 16 |
| 10 | CE09 | 120 | NotConnected | 0 | 0% | 0 |
| 11 | CE02 | 30 | Inquirey | 50 | 100% | 50 |
| 12 | CE03 | 60 | Operation | 40 | 83% | 33 |
| 13 | CE04 | 120 | Read | 30 | 33% | 10 |
| 14 | CE04 | 1 | Click | 40 | 100% | 40 |
| 15 | CE05 | 1 | Open | 20 | 100% | 20 |
| 16 | CE01 | 1 | Entry | 40 | 100% | 40 |
| 17 | CE02 | 1 | Receive | 20 | 100% | 20 |
| 18 | CE03 | 1 | Return | 0 | 0% | 0 |
| 19 | CE04 | 1 | Entry | 40 | 100% | 40 |
| 20 | CE10 | 240 | Visit | 80 | 100% | 80 |
| 21 | | | | | | |
| 22 | | | | | | |
| 23 | | | | | | |
| 24 | | | | | | |

Form PCT/ISA/210 (second sheet) (January 2015)

**INTERNATIONAL SEARCH REPORT**

| International application No. |
| --- |
| PCT/JP2020/013052 |

**A. CLASSIFICATION OF SUBJECT MATTER**

G06Q 10/06(2012.01)i; G06Q 30/02(2012.01)i
FI: G06Q10/06 302; G06Q30/02 470
According to International Patent Classification (IPC) or to both national classification and IPC

**B. FIELDS SEARCHED**

Minimum documentation searched (classification system followed by classification symbols)
G06Q10/00-99/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-81550 A (NTT COMMUNICATIONS CORPORATION) 24.05.2018 (2018-05-24) entire text, all drawings | 1-9 |
| A | WO 2002/056224 A1 (UTSUMI, Yasufumi) 18.07.2002 (2002-07-18) entire text, all drawings | 1-9 |
| A | JP 2019-40540 A (KOBE STEEL, LTD.) 14.03.2019 (2019-03-14) entire text, all drawings | 1-9 |
| A | JP 2018-88141 A (SOFTTHEATERSERVICE CORPORATION) 07.06.2018 (2018-06-07) entire text, all drawings | 1-9 |
| A | US 2008/0033808 A1 (BLACK, Andre B. et al.) 07.02.2008 (2008-02-07) whole document | 1-9 |

☐ Further documents are listed in the continuation of Box C.  ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 June 2020 (05.06.2020) | 16 June 2020 (16.06.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

INTERNATIONAL SEARCH REPORT
Information on patent family members

International application No.

PCT/JP2020/013052

| Patent Documents referred in the Report | Publication Date | Patent Family | Publication Date |
|---|---|---|---|
| JP 2018-81550 A | 24 May 2018 | (Family: none) | |
| WO 2002/056224 A1 | 18 Jul. 2002 | US 2004/0078796 A1<br>EP 1351175 A1<br>CN 1484802 A<br>KR 2003-0086249 A | |
| JP 2019-40540 A | 14 Mar. 2019 | (Family: none) | |
| JP 2018-88141 A | 07 Jun. 2018 | (Family: none) | |
| US 2008/0033808 A1 | 07 Feb. 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001338113 A
- JP 2006127320 A
- JP 5646546 B
- JP 5878218 B
- JP 5953588 B
- JP 2019061394 A